# EUROPÄISCHE PATENTSCHRIFT

(11) **EP 0 986 028 B1**
(45) Veröffentlichungstag und Bekanntmachung des Hinweises auf die Patenterteilung: **06.09.2006**
(21) Anmeldenummer: 99250282.3
(22) Anmeldetag: 20.08.1999
(51) Int. Cl.: G07B 17/00

(54) **Verfahren zur Dateneingabe in ein Dienstgerät und Anordnung zur Durchführung des Verfahrens**
Method for data entry into a service device and arrangement for carrying out the same
Procédé d'entrée de données dans un appareil de service et dispositif pour la mise en oeuvre de ce procédé

(30) Priorität: 11.09.1998 DE 19843249
(43) Veröffentlichungstag der Anmeldung: 15.03.2000
(73) Patentinhaber: Francotyp-Postalia GmbH, 16547 Birkenwerder (DE)
(72) Erfinder: Baum, Volker, 13189 Berlin (DE); Gelfer, Georg G., Glen Ellyn, IL 60137 (US); Kampert, Werner, 22081 Hamburg (DE); Koschitzki, Henrik, 12555 Berlin (DE)

(56) Entgegenhaltungen:
- FR-A- 2 665 003
- US-A- 4 442 501
- US-A- 4 812 965
- US-A- 5 710 706
- US-A- 5 805 711

## Beschreibung

Die Erfindung betrifft ein Verfahren zur Dateneingabe in ein Dienstgerät gemäß des Oberbegriffs des Anspruchs 1 beziehungsweise gemäß des Oberbegriffs des Anspruchs 10 eine Anordnung zur Durchführung des Verfahrens nach Anspruch 1. Die Erfindung ist geeignet zur Umstellung auf andere Dienstdaten in einem Dienstgerät, insbesondere auf eine neue Portogebührentabelle in einem Portorechner. Das Verfahren ist sowohl für Frankiermaschinen vorgesehen, als auch für Portorechner enthaltende Waagen bzw. ähnliche Portorechner enthaltende Geräte geeignet.

Aus DE 38 23 719 C2 und US 41 38 735 ist bekannt, daß ein Nachladen einer Tariftabelle für Portogebühren von einer entfernten Datenzentrale zu bestimmten Zeitpunkten veranlaßt wird. Wenn der Datenaustausch vom Server der Datenzentrale initiiert wird, muß die Frankiermaschine ständig angeschaltet bleiben, was natürlich nachteilig ist.

Alternativ wurde im US 5,490,077 bzw. im US 5,606,508 vorgeschlagen, das Datenladen von der Frankiermaschine on demand zu initiieren, wobei nach dem Einschalten der Frankiermaschine der Datenbestand in Abhängigkeit von Bedingungen (wie z.B. Name, Datum) aktualisiert wird. Um rechtzeitig die Mehrheit der Postkunden mit einer Tariftabelle auszustatten, wird letztere weit vor ihrem Inkrafttreten in einem Speicher eines Übertragungsmittels (Chipkarte bzw. Zelle eines GSM-Netzes) separat von der Frankiermaschine gespeichert. Beim Einschalten der Frankiermaschine wird das Datum des Kalenderbausteins der Frankiermaschine verwendet bzw. mit weiteren eingegebenen Bedingungen verknüpft, um die Tabelle auszuwählen, die bei Inbetriebnahme der Frankiermaschine in deren Speicher geladen wird. Beim Laden aus einem Speicher des Übertragungsmittels in den Speicher der Frankiermaschine erfolgt ein Aktualisieren der bisherigen Tabelle.

Aus dem US 5,710,706 (EP 724 141 A1) ist eine Dateneingabe in eine Waage bekannt, welche mit einer Frankiermaschine schnittstellenmäßig verbunden ist, um Tariftabellendaten mit Daten zu aktualisieren. Das Laden der Daten erfolgt von einer entfernten Datenzentrale per Modem zur Frankiermaschine. Das Laden und Aktualisieren erfolgt unmittelbar aufeinanderfolgend. Wenn eine Information vorliegt, daß Tariftabellendaten zu aktualisieren sind, erfolgt ein Laden und ggf. unter Zwischenspeichern von Tariftabellendaten in der Frankiermaschine und ein sektorweises Löschen der alten Portotabelle im nichtflüchtigen Speicher der Waage vor dem Übertragen der neuen Tariftabellendaten aus dem Zwischenspeicher der Frankiermaschine zur Waage und dem Einschreiben der neuen Tariftabellendaten in den nichtflüchtigen Speicher der Waage. In der Waage können mehrere Tabellen gespeichert sein. Jedoch bezieht sich jede Tabelle auf einen separaten Postbeförderer (Carrier), welcher über Tastatur anwählbar ist. Das Mindestgültigkeitsdatum einer zu einer Carrier-Identifikations-Nummer CIN zugeordneten Tariftabelle wird gespeichert und wird von der Frankiermaschine ausgewertet, um bei Bedarf Anforderungsdaten zu bilden, zum Laden von neuen Tariftabellendaten bzw. zur Aktualisierung im Speicher der Waage entsprechend der CIN. Ist jedoch das Mindestgültigkeitsdatum zugleich das Umstellungsdatum von einer alten auf eine neue Tariftabelle, dann ergibt sich ein Stau in der Kommunikation mit der Datenzentrale, wenn die Frankiermaschinen mehrheitlich mit dieser Datenzentrale am selben Tag kommunizieren wollen.

Aus der US 5,448,641 ist postalisches Gebührensystem mit Gültigkeitsprüfung im Endgerät auf der Benutzerseite bekannt. Die Portotariftabelle wird von der Datenzentrale zum Endgerät übertragen. Auch ein zur Portotariftabelle zugehöriger Code wird von der Datenzentrale zum Endgerät übertragen. Letzteres generiert einen Vergleichs-Code aus einer Information basierend auf der empfangenen Portotariftabelle. Anhand des Vergleiches des empfangenen Codes mit dem generierten Vergleichs-Code kann im Endgerät die Gültigkeit der empfangenen Portotariftabelle überprüft werden. Damit kann das Endgerät die übermittelte Portotariftabelle verifizieren. Zur Verringerung des Staues in der Kommunikation mit der Datenzentrale, wenn die Frankiermaschinen mehrheitlich mit dieser Datenzentrale am selben Tag kommunizieren wollen, müßte eine sehr hohe Anzahl an Modems eingesetzt werden, was den Aufwand in einer Datenzentrale erhöht. Durch den Stau ergeben sich Kommunikationsprobleme. Letztere führt für eine Anzahl von Geräten zur Verlängerung des Umstellungsvorganges auf eine neue Portogebührentabelle. Während dieser Zeit kann der Benutzer die betroffenen Geräte nicht zur Postbearbeitung betreiben.

In der europäischen Patentanmeldung EP 780 803 A2 wird ein Verfahren und Anordnung zur Dateneingabe in eine Frankiermaschine beschrieben. Eine Datenzentrale übermittelt eine Information des Postbeförderers (Carrier-Info), welche eine "Ich habe etwas für Dich"-Mitteilung umfaßt. Wenn dann der Benutzer aufgrund einer übermittelten Carrier-Info dann eine Eingabetaste betätigt, läuft ein Ladevorgang vollautomatisch ab. Dabei ist es auf der Frankiermaschinenseite schwierig vorherzusehen, ob nicht die übermittelten Daten eventuell einen solchen Umfang annehmen können, daß Speicherplatzprobleme resultieren.

Zwar wird im P.B.-Patent US 5.161,109 (EP 373 971 B1) ein Datensatz periodisch von der Zentrale abgefragt und von der Frankiermaschine zur Zentrale übermittelt. Eine Standard Datenbank dient zur Speicherung von Daten. Zu diesen Daten gehören auch Tarifdaten. Der übermittelte Report wird in der Zentrale überarbeitet und ein Datensatz an die Frankiermaschine aktualisiert zurückgesendet (down loading). Jedoch ist dies in Verbindung mit einem on demand-Laden von Tariftabelle nicht ohne weiteres möglich. Wenn eine Vielzahl an Ladeanforderungen gleichzeitig bei der Datenzentrale eingehen, kann eine Verstopfung oder lange Kommunikationsdauer resultieren, denn die vollständige Tabelle hat unter Umständen einen großen Umfang, was bei beiden Kommunikationspartnern Datenverarbeitungskapazität und Speicherplatz bindet.

Der Erfindung liegt die Aufgabe zugrunde, ein geeignetes Verfahren zur Dateneingabe in ein Dienstgerät zu entwickeln, um den Umstellungsvorgang auf andere Dienstdaten zu verkürzen. Eine weitere Aufgabe ist die Entwicklung einer geeigneten Anordnung zur vollautomatischen Durchführung des Verfahrens. Das Auszustatten eines Portorechners mit einer Tariftabelle soll bereits dann ermöglicht werden, wenn vom Postbeförderer/Carrier einer Datenzentrale eine neue Portotariftabelle mitgeteilt wurde. Auf Anforderung ist eine Portotariftabelle zum Dienstgerät zu übermitteln, um diese in entsprechende Speicher des Portorechners laden zu können. Schließlich ist ein auch für unterschiedliche Dienstgeräte geeignetes Verfahren zu entwickeln, daß einen kurzfristigen Umstellungsvorgang auf eine neue Portogebührentabelle unabhängig vom Gerätetyp ermöglicht.

Die Aufgabe wird mit den Merkmalen des Verfahrens nach dem Anspruch 1 und mit den Merkmalen der Anordnung nach Anspruch 10 gelöst.

Das Verfahren zur Dateneingabe in ein Dienstgerät, enthält erfindungsgemäße Schritte, welche insbesondere für eine Vielzahl von unterschiedlichen Dienstdaten ein problemloseres Laden erlauben. Die Datenzentrale prüft die hardware- und softwaremäßigen Rahmenbedingungen vor einem Laden, inclusive die Speicherplatzbelegung im Dienstgerät ohne die dort gespeicherten Dienstdaten selbst zu überprüfen oder zu bearbeiten. Die Analyse in der Datenzentrale endet mit der Übermittelung von Speicherempfehlungen an das Dienstgerät.

Das Dienstgerät enthält vorzugsweise eine Auslöseeinrichtung zum Auslösen des Ladens, einen Prozessor und einen Speicher zur Speicherung von Dienstdaten (zum Beispiel Portotariftabellen). Das Dienstgerät umfaßt einen Prozessor, der erfindungsgemäß programmiert ist,
- zur Bildung eines Statusreports der Speicherbelegung für Dienstdaten,
- zur Kommunikation mit Übertragung des Statusreports der Speicherbelegung zur Datenzentrale und mit Empfangen einer Empfehlungen enthaltenden Nachricht von der Datenzentrale und
- zum Prüfen von Empfehlungen für einen zukünftigen Status der Speicherbelegung aufgrund derjenigen von der Datenzentrale durchgeführten Analyse des Statusreports der Speicherbelegung für Dienstdaten, sowie
- zum Laden von neuen Dienstdaten in den vorgenannten Speicher.

Im Dienstgerät überwacht der Prozessor die Eingabe eines Ladebefehls, wertet beim Prüfen der empfangenen Empfehlungen deren Realisierbarkeit im Dienstdatenspeicher aus und selektiert freie Speicherbereiche entsprechend einer der geprüften Empfehlungen. Automatisch werden die Empfehlungen befolgt, nur im Fehlerfall nicht befolgt oder es wird eine alternative Empfehlung befolgt. Die Dienstdaten sind beim Laden entweder komprimiert oder unkomprimiert. Beim Laden von neuen Dienstdaten wird auch ein zugehöriges Umstellungsdatum in den vorgenannten Dienstdatenspeicher geladen.

Der Prozessor ist für eine Vielzahl an Dienstdaten programmiert, zum Überprüfen des gespeicherten Umstellungsdatums anhand des aktuellen Datums. Ein Weiterarbeiten mit den alten Dienstdaten erfolgt bei Unterschreitung des Umstellungsdatums durch das aktuelle Datum. Bei Überschreitung des Umstellungsdatums durch das aktuelle Datum oder bei Gleichheit erfolgt eine Anweisung zur Aktualisierung der Dienstdaten, wobei das Dienstgerät ein Einschreiben, ggf. mit Dekomprimieren von Daten, zur Aktualisierung der Dienstdaten ausführt.

Das Verfahren zur Dateneingabe in ein Dienstgerät, umfaßt in Verbindung mit einem Laden und Aktualisieren von Dienstdaten im Dienstgerät die Schritte:
a) Bereitstellen mindestens eines ersten und zweiten Speicherbereiches im Dienstgerät pro Dienstleister (Carrier), wobei der erste Speicherbereich für zukünftig ab Umstellungsdatum gültige neue Dienstdaten vorgesehen ist und der zweite Speicherbereich für bisher gültige Dienstdaten vorgesehen ist,
b) Überprüfen im Dienstgerät auf Eingabe eines Ladebefehls, wobei bei Vorliegen eines Ladebefehls eine Kommunikation mit der Datenzentrale erfolgt,
c) Bildung eines Statusreports der Speicherbelegung für Dienstdaten, d) Kommunikation mit Übertragung des Statusreports zur Datenzentrale, mit Senden und mit Empfangen einer Nachricht mit Empfehlungen für einen zukünftigen Status der Speicherbelegung im Dienstgerät, wobei dem Senden der Nachricht von der Datenzentrale zum Dienstgerät eine Bildung der Empfehlungen für einen zukünftigen Status der Speicherbelegung für eine Vielzahl an Dienstleistern aufgrund einer von der Datenzentrale durchgeführten Analyse des Statusreports der Speicherbelegung für Dienstdaten vorausgeht sowie
e) Selektieren eines der freien ersten Speicherbereiche im Speicher des Dienstgerätes entsprechend den eingegebenen Empfehlungen in Verbindung mit dem Prüfen letzterer auf Realisierbarkeit im Speicher des Dienstgerätes,
f) Bildung von entsprechenden Anforderungsdaten und deren Übertragung zur Datenzentrale bei Realisierbarkeit und Fehlermeldung bei Nichtrealisierbarkeit,
g) Laden von neuen Dienstdaten entsprechend der Anforderungsdaten in den ersten Speicherbereich und von einem zugehörigen Umstellungsdatum in den dritten Speicherbereich sowie
h) automatisches Aktualisieren unabhängig und zeitlich entkoppelt von dem vorgenannten Laden, wobei Dienstdaten aus einem entsprechenden ersten Speicherbereich in den zweiten Speicherbereich des Dienstgerätes eingespeichert werden, wobei das Aktualisieren zu einem beliebig späteren Umstellungsdatum erfolgen kann.

Das Dienstgerät ist beispielsweise ein Portorechner und die Dienstdaten sind vorzugsweise Daten einer Portotariftabelle. Es ist vorgesehen, daß der Portorechner in ein Dienstgerät eines Postverarbeitungssystems integriert ist oder separat vom Dienstgerät angeordnet ist. Beim Dienstgerät handelt es sich vorzugsweise um eine elektronische Frankiermaschine oder um eine Portorechnerwaage, die auf mindestens einen der Postbeförderer eingestellbar ist. Die Erfindung geht von dem Bedürfnis einiger Postbeförderer aus, die zum Gebrauch bestimmten Dienstdaten beliebig zu ändern. Die Dienstdaten schließen insbesondere die Gebühren in Portotariftabellen ein, sind aber nicht darauf beschränkt. Wenn nachfolgend vereinfachend nur von Portotariftabellen gesprochen wird, sind andere Dienstdaten jedoch nicht ausgeschlossen.

Die Übertragung und Speicherung von einer neuen Portotariftabelle in einem Portorechner kann bei Bedarf oder vorprogammiert auf einen ersten Zeitpunkt automatisch durchgeführt werden. Das Aktualisieren von Tariftabellendaten wird ab einem zweiten Zeitpunkt automatisch durchgeführt. Der Portorechner kann in einem der Geräte eines Postbearbeitungssystems angeordnet sein. Eine Auslösetaste zum Laden ist vorzugsweise in demselben Gerät angeordnet, welches den Portorechner enthält.

Erfindungsgemäß kann der Speicher des Portorechners mindestens zwei Tabellen für denselben Postbeförderer speichern. Der Postbeförderer ist die zuständige Postbehörde oder ein privater Carrier, welche dem Benutzer des Postbearbeitungssystems eine Information übermittelt. Eine der beiden Tabellen ist die zukünftig gültige Tabelle deren Ladung kostenpflichtig durch die Betätigung einer Auslösetaste frühzeitig veranlaßt wurde. Wenn die Daten schon vor dem Tag der Umstellung geladen werden, können in vorteilhafter Weise die Telefongebühren verringert werden. Der Benutzer wählt einen entsprechend günstigen Zeitpunkt, so daß beim Laden nur geringe Telefongebühren anfallen. Da die Aktualisierung nicht mehr während einer Kommunikation mit dem Server sondern unabhängig davon erfolgt, kann die Aktualisierung in allen Systemen gleichzeitig durchgeführt werden, falls diese Systeme im voraus die Daten in einen ihrer Speicher geladen haben und nichtflüchtig speichern. Diese Lösung erfordert nur ein wenig mehr an Speicherplatz, welcher immer preiswerter wird, und minimiert damit nicht nur die Umstellungszeit sondern auch die erforderliche Anzahl der Modems, welche am Server angeschlossen sein müssen.

Die Abläufe, womit eine Aktualisierung von Daten ausgelöst werden, laufen automatisch ab. In demjenigen Gerät des Systems, welches das Datum für das Inkafttreten der Tabelle bzw. ein Umstellungsdatum speichern soll wird ein Speicherplatz dafür reserviert. Der Speicherplatz muß unter bestimmten Bedingungen abgefragt werden. Dasjenige Gerät des Systems, welches diese Abfrage durchführt, nimmt auch die Prüfung vor, ob der Umstellungszeitpunkt erreicht ist.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1,: Blockschaltbild einer Frankiermaschine mit internen Portorechner und Portotariftabellenspeicher,
- Figur 2,: Flußplan für eine Frankiermaschine nach Fig.1,
- Figur 3,: Flußplan des Kommunikationsmodus,
- Figur 4,: Blockschaltbild einer Frankiermaschine mit Anschluß zu einer Portorechner-Waage,
- Figur 5,: Blockschaltbild einer Portorechner-Waage,
- Figur 6,: Dienstdatenspeicher mit freien Speicherplätzen.

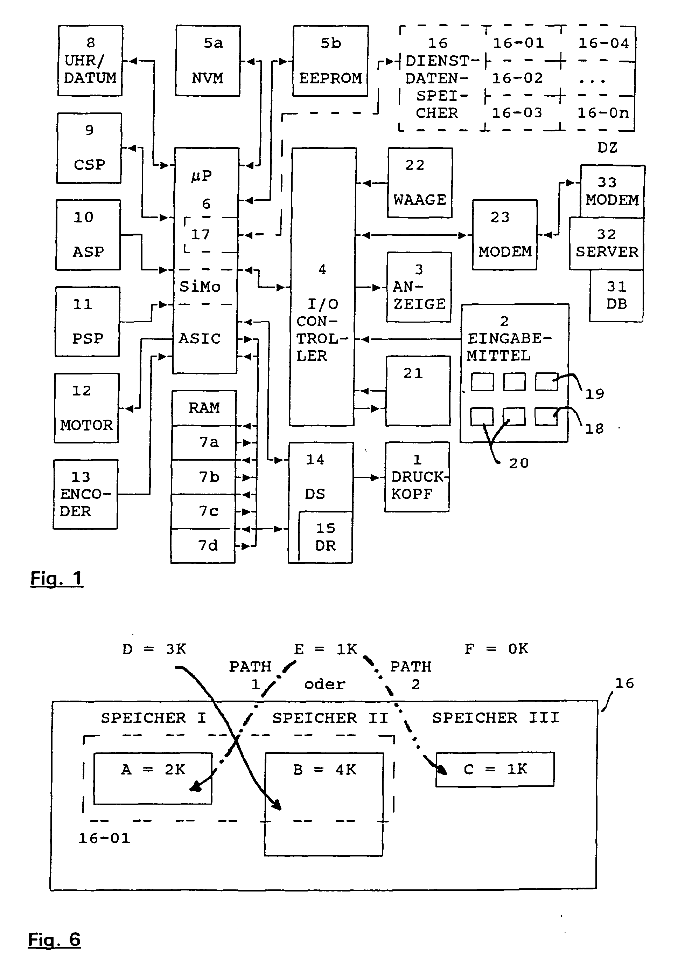

Die Figur 1 zeigt ein Blockschaltbild der erfindungsgemäßen Frankiermaschine mit einem Druckermodul 1 für ein vollelektronisch erzeugtes Frankierbild, mit mindestens einem mehrere Betätigungselemente aufweisenden Eingabemittel 2, einer Anzeigeeinheit 3, einem die Kommunikation mit einer Datenzentrale herstellenden MODEM 23, weitere Eingabemittel 21 bzw. Waage 22 welche über einen Ein/Ausgabe-Steuermodul 4 mit einer Steuereinrichtung 6 gekoppelt sind und mit nichtflüchtigen Speichern 5a, 5b bzw. 9, 10 und 11 für Daten, welche die variablen bzw. die konstanten Teile des Frankierbildes einschließen, und bzw. Programme zur Verarbeitung der Daten in Zusammenhang mit der Postbeförderungs- bzw. Dienstleistung, welche vom Carrier zu erbingen ist. Die Steuereinrichtung 6 kann neben einem Mikroprozessor µP in weiteren Ausführungsformen auch einen separaten Portorechner 17 und weitere Mittel, wie eine anwenderspezifische Schaltung ASIC für die Kommunikation mit Sensoren und Aktoren der Maschinenbasis (EP 716 398 A2), ein Sicherheitsmodul SiMo (EP 789 333 A2) und andere Mittel, ggf. zur Verbesserung der Datensicherheit (DE 196 50 993 A1), enthalten.

Neuere Frankiermaschinen setzen digital arbeitende Druckmittel 1 ein. Beispielsweise wurden in Frankiermaschinen vom Typ T1000 bzw. JetMail des Anmelders weltweit erstmals Thermotransferdrucker bzw. Tintenstrahldrucker eingesetzt. Damit ist es prinzipiell möglich, auf einen gefüllten Brief im Bereich des Frankierstempels andere Informationen bzw. beliebig anders zu drucken, welche in einem entsprechenden Zusammenhang mit einer Dienstleistung eines Carriers stehen. Es ist also leicht möglich zwischen den privaten Postbeförderern und Ihren Dienstleistungen zu wechseln. Der Frankierstempelsabdruck enthält deshalb vorteilhaft einen Hinweis auf den Carrier und/oder die in Anspruch genommene oder noch geplante Dienstleistung. Ein Charakterspeicher 9 liefert die nötigen Druckdaten für die variablen Teile des Frankierbildes zu einen flüchtigen Arbeitsspeicher 7. Die Steuereinrichtung 6 weist einen Mikroprozessor µP auf, der mit dem Ein/Ausgabe-Steuermodul 4, mit dem Charakterspeicher 9, mit dem flüchtigen Arbeitsspeicher 7 und mit nichtflüchtigen Arbeitsspeichern 5a, 5b (mit internen nichtflüchtigen Tarifspeicher) bzw. (gestrichelt gezeichnet) mit einem zusätzlichen nichtflüchtigen Tarifspeicher 16, mit einem nichtflüchtigen Arbeitsspeicher 10 und Programmspeicher 11, mit dem Motor einer Transport- bzw. Vorschubvorrichtung ggf. mit Streifenauslösung 12, einem Encoder (Codierscheibe) 13 sowie mit einem batteriegestützten Kalenderbaustein (Uhr/Datums-Baustein 8) in Verbindung steht. Derjenige Speicherbaustein, welcher den nichtflüchtigen Arbeitsspeicher 5b umfaßt, kann beispielsweise ein EEPROM sein, der durch mindestens eine zusätzliche Maßnahme, beispielsweise Aufkleben auf der Leiterplatte, Versiegeln oder Vergießen mit Epoxidharz, gegen Entnahme gesichert wird. Nähere Ausführungen zu einzelnen Funktionen der Mittel werden in der deutschen Patentanmeldung DE 195 34 530 A1 gemacht. Letztere trägt den Titel: Verfahren zur Absicherung von Daten und Programmcode einer elektronischen Frankiermaschine.
Beispielsweise kann die Speicherung der Portotariftabellen innerhalb des nichtflüchtigen Speichers 5a realisiert werden, indem besondere Speicherbereiche bereitgestellt werden. Die Portotariftabellen können separat in einem nichtflüchtigen Speichers 16 (gestrichelt gezeichnet) gespeichert werden. Die einzelnen Speicher können in mehreren physikalisch getrennten oder - in nicht gezeigter Weise - in wenigen Bausteinen zusammengefaßt verwirklicht sein. Die zukünftig gültige Tariftabelle wird im entsprechend dafür eingerichteten vorgesehenen Speicherbereich 16-01 bzw. die bisher gültige Tariftabelle wird entsprechend im separat vorgesehenen Speicherbereich 16-02 gespeichert. Das zugehörige Umstellungsdatum wird in einem dritten Bereich 16-03 des nichtflüchtigen Speichers 16 gespeichert. Eine Information im vierten Speicherbereich 16-04 für solche in der Datenzentrale verfügbare neue Tariftabellendaten, ist beispielsweise eine carrierspezifische Bestell- oder Versionsnummer. Die verfügbare Speicherkapazität im nichtflüchtigen Speicher beträgt beispielsweise 20 kByte wird durch eine platzsparende Speicherplatzverwaltung optimal genutzt. Der nichtflüchtige Tarifspeicher ist vorzugsweise ein batteriegestützter C-MOS-RAM-Baustein.
Die Datenzentrale besitzt Modems 33, die mit einem Server 32 verbunden sind, welcher auf eine Datenbank 31 zugreift, wenn eine entsprechende Anforderung empfangen wird. Bei bedarfsweiser Betätigung einer Taste der Tastatur 2, mittels einem anderem geeigneten Eingabemittel 21 der Frankiermaschine oder zeitgesteuert mittels Kalenderbaustein 8, die eine Auslöseeinrichtung bilden, wird ein Ladebefehl erzeugt, der das Laden der Tariftabellendaten ausgelöst. Der Mikroprozessor ist ggf. program-miert, daß Dienstdaten aus der Datenzentrale DZ geladen werden, die nur Teile einer Tabelle ausmachen (Patches). Der Mikroprozessor kann nun die Anforderungsdaten per Modem 23 über ein Kommunikationsnetz zum Modem 33 der Datenzentrale übermitteln. Alternativ werden Sende-Empfangseinrichtungen eingesetzt, um Anforderungsdaten per Funk zu übermitteln oder digitale Kommunikationsnetze entsprechend benutzt.

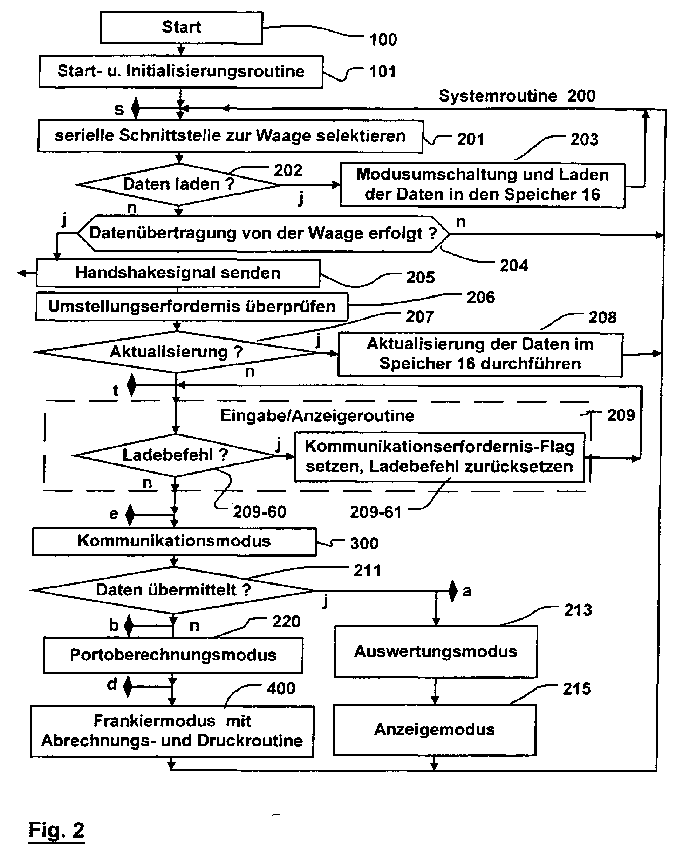

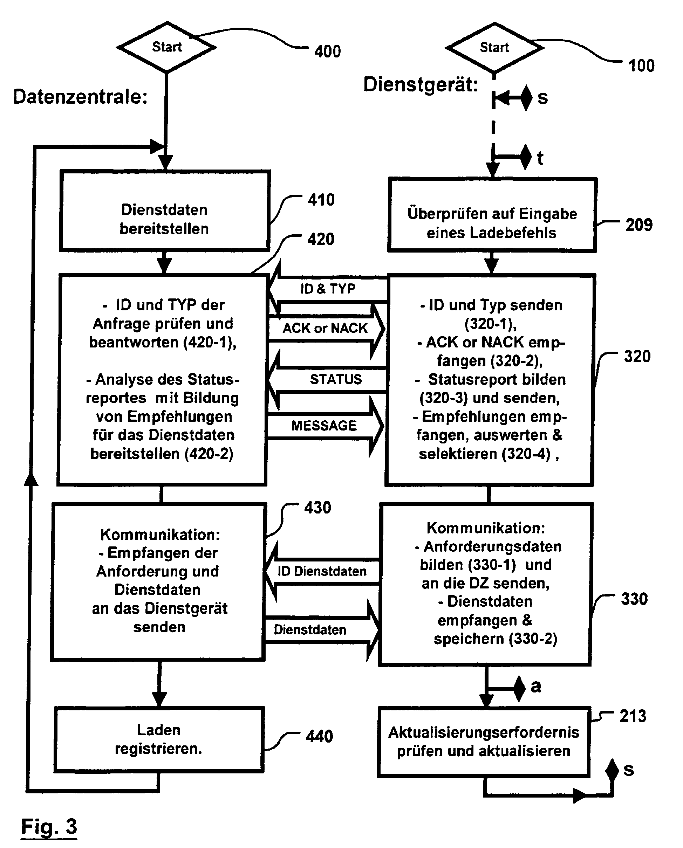

In der Figur 2 wird ein Flußplan für eine Frankiermaschine nach Fig.1 gezeigt, bei welcher für eine im Betrieb befindlichen Frankiermaschine ein Laden separat von einer Umstellung erfolgt. Nach dem Einschalten der Frankiermaschine im Schritt Start 100 und dem Durchlaufen einer Start- und Initialisierungsroutine 101, welche in der deutschen Patentanmeldung DE 195 34 530 A1 näher erläutert wurde, wird der Punkt s der Systemroutine 200 erreicht. Die Frankiermaschine ist nun in Betrieb genommen und befindet sich in ihrem normalen Betriebsmodus, welcher auch Normalmodus genannt wird. In einem ersten Schritt 201 werden nichtflüchtig gespeicherte Eingabedaten zur Einstellung der Frankiermaschine aufgerufen. Wurde während der Initialisierungsroutine 101 die Frankiermaschine auf die Zusammenarbeit mit einer in Betrieb genommenen Waage eingestellt, dann wird im ersten Schritt 201 eine serielle Schnittstelle zur Waage selektiert, um mindestens einen übermittelten Gewichtswert zu empfangen. Das Eingabemittel Tastatur 2 erlaubt eine Vielzahl von weiteren Eingaben zur Veränderung der Einstellungen. Beispielsweise wird bei Betätigung einer Taste 19 der Tastatur 2 ein Ladebefehl direkt eingegeben. Alternativ kann mittels der Tasten 20 ein Code eingegeben werden, der mittels Taste 18 quittiert wird, um einen Ladebefehl später (ggf. periodisch) zu generieren. Die Eingabe/Anzeigeroutine 209 enthält eine Vielzahl an Abfrageschritten, von welchen nur ein einziger Abfrageschritt 209-60 dargestellt ist. Letzterer betrifft die Abfrage auf Vorliegen eines Ladebefehls. Wurde eine derartige Eingabe erkannt, wird auf Subschritt 209-61 verzweigt, um ein Kommunikationserfordernis-Flag (E-Flag) zu setzen und dann den Ladebefehl rückzusetzen. Wurde keine (erneute) derartige Eingabe erkannt, wird, ggf. über weitere Abfrageschritte, zum Punkt e verzweigt. Im Kommunikationsmodus 300 wird geprüft, ob ein ein E-Flag gesetzt wurde, welches im Kommunikationsmodus abgefragt wird, woraufhin eine automatisch ablaufende elektronische Kommunikation mit der Datenzentrale ausgelöst wird.
Im Kommunikationsmodus 300 identifiziert sich die anfordernde Frankiermaschine bei der Datenzentrale mit ihrer Identifikations-Nummer (ID). Ist das Dienstgerät, welches die Dienstdaten benötigt, aber ein separater Portorechner, teilt auch dieser seine Identität TYP der Datenzentrale mit. Die Art (Table Typ) der gewünschten Dienstdaten wird ebenfalls mitgeteilt ("rate table"). Im Rahmen eines Berichtes (Statusreport) über den Zustand der Dienstdaten werden die Versionsnummern der bisherigen Portotariftabellen übermittelt. Das erlaubt eine Analyse in der Datenzentrale, ob und wieweit bisher mit gültigen Tabellen gearbeitet wurde. Auch wird die Auffindung der neuen Portotariftabellen in der Datenbank DB 31 der Datenzentrale vereinfacht. Jeder Portotariftabelle ist eine Release- oder Bestellnummer zugeordnet, welche mit der übermittelten zu vergleichen ist, um die neue Release- oder Bestellnummer der zukünftig zu ladenen Portotariftabelle zu ermitteln. Als Information im vierten Speicherbereich (16-04) kann alternativ auch ein einzigartiger Name bzw. Markierung die neuen Dienstdaten identifizieren. Der Server 32 ist zur Überprüfung programmiert, was weiter unten anhand der Figur 3 näher erläutert wird. Die Portotariftabellendaten werden vorzugsweise zunächst im Speicherbereich 7d des flüchtigen Arbeitsspeichers RAM 7 der Frankiermaschine zwischengespeichert, um eine Überprüfung zu ermöglichen.

Wurden im Ergebnis der Kommunikation Dienstdaten übermittelt und im Arbeitsspeicherbereich RAM 7d zwischengespeichert, dann wird das im nachfolgendem Abfrageschritt 211 erkannt und es wird zum Auswertemodus 213 verzweigt. Im Auswertemodus ist es nicht nur möglich, die Korrektheit der Übermittlung und Gültigkeit der neuen Dienstdaten zu überprüfen, sondern es können weitere Überprüfungen oder statistische Erfassungen realisiert werden. Es ist optional vorgesehen, im Auswertemodus das Aktualisierungserfordernis von Dienstdaten zu prüfen und ggf. die Dienstdaten zu aktualisieren. Das Ergebnis dieser Überprüfung wird im Anzeigemodus 215 angezeigt, bevor zum Punkt s der Systemroutine zurückverzweigt wird. War das Ergebnis dieser Überprüfung positiv, wird für ein nachfolgendes Updating beispielsweise ein U-Flag zur Modusumschaltung gesetzt. Im Abfrageschritt 202 kann nun zum Beispiel anhand des gesetzten U-Flags geprüft werden, ob Dienstdaten in den nichtflüchtigen Speicher 16 zu laden sind. Im Schritt 203 erfolgt dann eine Vielzahl von Subschritten zur Modusumschaltung und zum Laden der Dienstdaten in den nichtflüchtigen Speicher 16. Das U-Flag zur Modusumschaltung wird dann in einem abschließenden Subschritt wieder zurückgesetzt, bevor zum Punkt s der Systemroutine zurückverzweigt wird.

Bei der nächsten Überprüfung ist das Ergebnis negativ. War das Ergebnis dieser Überprüfung aber negativ, so wird zum nächsten Schritt, beispielsweise zum Abfrageschritt 204, verzweigt. Im Abfrageschritt 204 wird abgefragt, ob eine Datenübertragung von der Waage 22 erfolgte. Wird kein Gewichtswert von der Waage 22 ermittelt und zur Frankiermaschine übertragen, dann wird dies im Abfrageschritt 204 festgestellt und dann wird zum Punkt s der Systemroutine 200 zurückverzweigt. Die Frankiermaschine wartet somit auf eine Eingabe seitens der Waage 22. Ist diese Eingabe erfolgt, wird im Schritt 205 ein Handshake-Signal zur Waage 22 gesendet und dann zum Schritt 206 verzweigt, um das Erfordernis einer Umstellung, insbesondere anhand eines gespeicherten Umstellungstages und eines aktuellen Datums, zu überprüfen. Beim Erfordernis einer Umstellung wird zum Schritt 208 verzweigt, um eine Aktualisierung der Dienstdaten in den Speicherbereichen des nichtflüchtigen Speichers 16 durchzuführen. Dann wird zum Punkt s der Systemroutine zurückverzweigt. Anderenfalls wird der Punkt t der Systemroutine 200 erreicht. Die Eingabe/Anzeigeroutine 209 enthält eine Vielzahl an Abfrageschritten, von welchen jeder einzeln abgefragt wird. In der o.g. deutschen Patentanmeldung DE 195 34 530 A1 werden weitere Abfrageschritte gezeigt. Liegen keine weiteren Eingaben wird der Schritt 300 ohne Kommunikation durchlaufen. Wenn nun keine weiteren Daten übermittelt wurden, was über den Abfrageschritt 211 festgestellt wird, wird der Punkt b der Systemroutine 200 erreicht. In der o.g. deutschen Patentanmeldung DE 195 34 530 A1 ist bereits dargelegt, daß eine Vielzahl an Schritten zwischen den Punkten b und d der Systemroutine 200 durchlaufen werden kann, bevor zum Frankiermodus 400 verzweigt wird. In an sich bekannter Weise ist einer der Schritte im vorliegenden Ausführungsbeispiel ein Portoberechnungsmodus 220. Der nachfolgende Frankiermodus 400 enthält eine ansich bekannte Abrechnungs- und Druckroutine. Nach dem Drucken eines Frankierabdruckes wird zum Punkt s der Systemroutine 200 zurückverzweigt.

Der Mikroprozessor µP ist als Portorechner sowie zum Laden und Aktualisieren von Tariftabellendaten durch ein im Programmspeicher 11 gespeicherten Programm programmiert. Der Programmspeicher 11 ist als Nurlesespeicher ROM ausgeführt. Der Mikroprozessor ist programmiert, zum Überprüfen des gespeicherten Umstellungsdatums in der Frankiermaschine anhand des aktuellen im Uhren/Datums-Baustein 8 gespeicherten Datums und zum Weiterarbeiten mit den alten Tariftabellendaten im Falle einer Unterschreitung des Umstellungsdatums durch das aktuelle Datum oder anderenfalls zum Übermitteln einer Anweisung zur Ausführung der Umstellung.

Die Steuereinrichtung 6 kann alternativ einen separaten Prozessor 17 zur Portoberechnung enthalten, welcher mit dem Speicher 16 einen Portorechner bildet. Der Mikroprozessor µP ist programmiert, zum Überprüfen des gespeicherten Umstellungsdatums in der Frankiermaschine anhand des aktuellen Datums. Der Prozessor 17 ist programmiert, zum Weiterarbeiten mit den alten Tariftabellendaten bei Unterschreitung des Umstellungsdatums durch das aktuelle Datum. Der Mikroprozessor µP ist programmiert, zum Übermitteln einer Anweisung an den Portorechner 17 zur Aktualisierung der Tariftabellendaten bei Gleichheit oder bei Überschreitung des Umstellungsdatums durch das aktuelle Datum.

In einer Ausführungsform wird die Frankiermaschine beim Initialisieren auf eine bestimmte Stadt und ein bestimmtes Ladedatum eingestellt. Diese Einstellungen können im nichtflüchtigen Speicher 5a oder 16 in separaten Speicherbereichen 16-05, 16-06 gespeichert werden. Der Mikroprozessor µP bildet zusammen mit der Tastatur 2 und dem Kalenderbaustein 8 eine Auslöseeinrichtung, die einen Ladebefehl abgeben kann, um ein vorprogrammiertes Laden zu einem ersten Zeitpunkt auszulösen (Lademodus). Das im Speicherbereich 16-06 gespeicherte Ladedatum wird im Abfrageschritt 202 abgefragt. Wird die Frankiermaschine nicht vorher abgeschaltet, werden Dienstdaten zum vorprogrammierten ersten Zeitpunkt, beispielsweise nach Mitternacht, geladen. Es liegt im separaten Speicherbereich 16-03 auch ein gespeichertes Umstellungsdatum vor. Somit kann ein Umstellen von Dienstdaten zu einem zweiten Zeitpunkt automatisch im Betriebsmodus der Frankiermaschine erfolgen. Der zweite Zeitpunkt für die Umstellung wird vom Postbeförderer vorgegeben und wird beim Laden in den dritten Speicherbereich 16-03 geladen. Bei Gleichheit oder bei Überschreitung des Umstellungsdatums durch das aktuelle Datum, ist der Portorechner zur Aktualisierung der Tariftabellendaten programmiert. Dabei führt der Portorechner ein Löschen der alten Dienstdaten und ggf. ein Dekomprimieren vor dem Einschreiben der Daten in den zweiten Speicherbereich 16-02 bei der Aktualisierung der Tariftabellendaten aus.
Anhand der Figur 3 wird der Flußplan des Kommunikationsmodus für ein Dienstgerät und die entsprechenden Abläufe in der Datenzentrale erläutert. Das Dienstgerät wird im Schritt 100 gestartet und es werden eine Anzahl von Schritten abgearbeitet, welche anhand der Figur 2 bereits erläutet wurden. Im Rahmen einer Eingaberoutine 209 erfolgt ein Überprüfen auf Eingabe eines Ladebefehls, um on demand eine Kommunikation zu starten. Die Kommunikation im Kommunikationsmodus 300 umfaßt mindestens eine erste und zweite Transaktion, welche eine Vielzahl von Subschritten umfassen.
Die erste Transaktion 320 beginnt in einem ersten Eröffnungssubschritt mit der Übermittlung der Identifikation ID des Dienstgerätes. Die ID ist beispielsweise die Frankiermaschinen-Seriennummer. Optional zur ID kann der Maschinentyp des anrufenden Dienstgerätes, der ISO-Countrycode, eine Service-ID und ein Release des Übertragungsprotokolls übermittelt werden. Die Service-ID beschreibt die Domäne des nachgefragten Dienstes, beispielsweise Portotariftabelle, Klischeesowie Kryptolink-Nachladedienst. Das Release beschreibt den aktuellen technischen Stand des Übertragungsprotokolls. In einem zweiten Eröffnungssubschritt wird mindestens der Typ der Transaktion übermittelt, um klarzustellen, welche Dienstdaten geladen werden sollen.

Neben dem Typ der Transaktion können weitere spezifische Mitteilungen übermittelt werden: Typ und ID der Zielmaschine, welche die Dienstdaten nutzt, beispielsweise ein Portorechner oder eine portorechnende Waage. Optional erfolgt eine Beschreibung der Dienstsoftware der Zielmaschine und deren Fähigkeiten bezüglich des Ladens.
Das Dienstgerät hat einen Mikroprozessor, welcher während der ersten Transaktion einen Statusreport bildet. Entsprechend einem im Programmspeicher 11 gespeicherten Programm wird eine Liste mit einem Sachverzeichnis der Speicherbelegung entsprechend der Erfordernisse für das Dienstgerät erstellt. Insbesondere ist es möglich, daß das Dienstgerät Portotabellen komprimiert in einem Speicherbereich speichert, und diese erst bei Bedarf "auspackt". Portotabellen können aber auch ungepackt oder im INTEL-HEX-Format gespeichert vorliegen. In diesem Sachverzeichnis sind neben Informationen, die die Größe der verfügbaren Speicherkapazität, die Gesamtzahl der vorhandenen Speicherbereiche für den entsprechenden Dienst, die Datenformate und Patches (Intel-Hex-Format) und Speichergröße der Dienstdaten beschreiben, auch Kurzbeschreibungen der Dienstdaten bzw. inhaltliche Angaben aufgegliedert. Jede Portotabelle eines Carriers trägt einen Carrier-Namen bzw. eine Carrier-ID und hat eine Versionsnummer, eine Revisionsnummer und ein Gültigkeitsdatum. Letzteres kennzeichnet die Gültigkeit ab einem vorbestimmten Datum. Die Kombination aus Versions- und Revisionsnummer bezeichnen wir als Release. Ein dritter Subschritt der ersten Transaktion 320 umfaßt vorgenanntes Bilden und Senden des Statusreports STATUS an einen speziellen Server 32 der Datenzentrale. Der Server 32 führt in einem Subschritt des Schrittes 420 mit Sicht auf die - im Schritt 410 - von mindestens einem der Carrier neu bereitgestellten Dienstdaten eine Analyse des übermittelten Statusreportes durch und bildet Empfehlungen im Ergebnis der Analyse. Für jede gespeicherte Diensttabelle wird deren Typ, die ID des Tabellenspeichers und die empfohlene Operation mitgeteilt, beispielsweise die betreffende Tabelle ist gültig und soll beibehalten werden. Alternative Operationen sind, ein Ersetzen einzelner Tabellenabschnitte oder Dienstdaten durch Patches, ein ersatzloses Löschen oder - falls Ersatz vorhanden ist -Wechseln der Tabelle.

Die Empfehlungen werden als Analyseergebnis von nur wenigen Bytes und/oder in Form einer überarbeiteten Liste der möglichen Änderungen in einer Nachricht MESSAGE an das Dienstgerät übermittelt. Die Form der Liste wird im letzteren Fall beibehalten. Sie kann sich bei anderen Dienstgeräten aber in der Form unterscheiden. Die Liste enthält nur Angaben für mögliche Speicherbelegung mit aktuellen und zuküftig aktuellen Dienstdaten, nicht jedoch die Dienstdaten selbst, die erst bei einer folgenden zweiten Transaktion 330, 430 übermittelt werden.

Anhand der Figur 6, welche einen Dienstdatenspeicher mit freien Speicherplätzen zeigt, wird ein einem Dienstgerät unterbreiteter einfacher Vorschlag erläutert. Der Statusreport ist eine Mitteilung des Dienstgerätes über z.B. drei Speicherbausteine I, II, III und deren Speicherbelegung bzw. über noch freie Speicherplätze A = 2K, B = 4K, C = 1K. Ein erster Speicherbereich 16-01 kann über einen Speicherbaustein I oder II hinausgehend definiert werden. Der Server hat Datenblöcke der Größe D = 3K, E = 1K, F = 0K für neue Dienstdaten. Der Statusreport vom Dienstgerät trifft ein und wird im Server analysiert.
A < D, A > E, A > F;
B > D, B > E, B > F;
C< D, C < E, C > F.

Wegen B > D > A, C gibt es für einen Datenblock D nur eine einzige Möglichkeit, letzteren in den noch freien Speicherplatz B zu laden. Die Analyse im vorliegendem Beispiel ergibt aus Logikgründen zwei weitere Empfehlungen (path 1, path 2) für das Dienstgerät:
- Path 1:: Datenblock E in Speicherbaustein I laden, Speicherbaustein III löschen;
- Path 2:: Datenblock E in Speicherbaustein III laden, Speicherbaustein I löschen.

Obwohl für C also ein gleich großer Speicherbereich vorliegt, wie für einen Datenblock E benötigt wird, kann es gemäß der weiteren Empfehlung für einen bestimmten Gerätetyp am sinnvollsten sein, den Datenblock E in den Speicherbaustein I zu laden, der über mehr freie Speicherkapazität verfügt. Da der Speicherbaustein III bald nicht mehr benötigte unaktuelle Datensätze enthält, kann das Gerät letzteren löschen. Die Art der Empfehlungen ist von der Art und Aktualiträt der Dienstdaten und vom Gerätetyp des Dienstgerätes abhängig. Für andere Dienstdaten sind auch folgene Empfehlungen für das Dienstgerät möglich, für den Fall, daß der Zugriff auf noch aktuelle alte Daten in Speicherbaustein I oder III erhalten bleiben soll:
1. Datenblock D in Speicherbaustein II laden, Datenblock E in Speicherbaustein I laden, Speicherbaustein III nicht löschen;
2. Datenblock D in Speicher II laden, Datenblock E in Speicher III laden, Speicher I nicht löschen;

Möglich ist es auch für einen Fall, wo es keine aktuellen Daten nachzuladen gibt, daß entsprechende Empfehlungen dem Dienstgerät mitgeteilt werden. Gewöhnlich gibt es aber Änderungen, wenn das Laden veranlaßt wird, so daß die Empfehlungen eine Vielzahl an Vorschlägen umfassen.

Die Liste der möglichen Änderungen umfaßt eine Anzahl an Vorschlägen, wobei erfindungsgemäß der sinnvollste Vorschlag zuerst gelistet ist. Zu jedem Vorschlag sind Typ, Format, Anzahl der zu übertragenden Bytes, Größe der Datei nach dem Entpacken bzw. nach dem Patch, eine Beschreibung der neuen Tabelle bzw. Dienstdaten durch RELEASE, eine ID des Zielspeichers für die Tabelle bzw. Dienstdaten angegeben. Wenn die Änderung der Tabelle durch den Beförderer (Carrier) initiiert wurde, wird die bisherige Versionsnummer für die neue Tabelle inkrementiert. Die Revisionsnummer wird immer dann inkrementiert, wenn eine Überarbeitung einer bereits freigegebenen Tabelle aus internen Gründen (z.B. Bugfix) nötig wird. Die RELEASE-Information ist Bestandteil einer Portogebührentabelle. Wenn nun im ersten Schritt 410 Dienstdaten entsprechend bereitgestellt wurden, muß die neue Tabelle beim Bilden der Empfehlungen für ein Portotariftabellenladen berücksichtigt werden, wenn vom Nutzer die Dienstleistung des betreffenden Postbeförderers in Anspruch genommen werden soll. Hat ein Dienstgerät mehrere Releases einer Tabelle gespeichert, deren Gültigkeitsdatum kleiner ist, als das aktuelle Datum, so muß die Tabelle mit der höchsten Releasenummer verwendet werden. Insbesondere können deshalb Tabellen mit niedrigeren Releasenummern gelöscht werden. Die Portotabellen können im verschiedenen Formaten vorliegen. Entsprechend ergibt sich eine Anzahl an zu übertragenden Bytes bzw. die Dateigröße, welche dem Dienstgerät mitgeteilt werden.
Im vierten Subschritt der ersten Transaktion 320 werden die übermittelten Empfehlungen empfangen und im Dienstgerät ausgewertet, um einen entsprechenden Speicherbereich zur Verfügung zu stellen bzw. um einen freien Speicherbereich zu selektieren. Im Dienstgerät (Client) findet während der Auswertung im vorgenannten vierten Subschritt eine Selektion einer der empfohlenen Tabellen statt. Der Client benötigt für den folgenden Downloadabschnitt die Beschreibung einer (der) Tabelle(n), die der Server in der zweiten Transaktion senden soll.
Folgende Szenarien sind möglich:
1. der Client wählt aus den im vorigen Abschnitt erhaltenen Empfehlungen aus. Dabei sind als Client unterschiedliche Dienstgeräte möglich, d.h. solche, die eine Benutzer-Eingabe erforderlich machen oder bei welchen die Auswahl automatisch erfolgt,
2. der Client, will einen abgebrochenen Download wiederaufnehmen, d.h. der Client weiß, welche Tabelle geladen wurde, als der Abbruch erfolgte, und er weiß, welcher Teil der bereits geladenen Daten gültig sind und kennt den Offset für eine Wiederaufnahme des Ladens,
3. der Client fordert eine Tabelle explizit an (Interaktion mit dem Benutzer nötig).

Bei der folgenden zweiten Transaktion 330 werden zunächst Anforderungsdaten gebildet. Letztere identifizieren die gewünschten Dienstdaten. Insbesondere werden für Portotariftabellen der Tabellen-Typ und die Tabellen-Beschreibung als Anforderungsdaten übermittelt. Optional wird eine Mitteilung "Offset" für die Fortsetzung einer unterbrochenen Kommunikation als ein 4 Byte-Wert übermittelt. Am Anfang gab es noch keine Unterbrechung und der Offset-Wert ist Null.
Beispielsweise werden somit 116 Byte für eine Übertragung von Tabellen-Anforderungsdaten im Land USA benötigt:

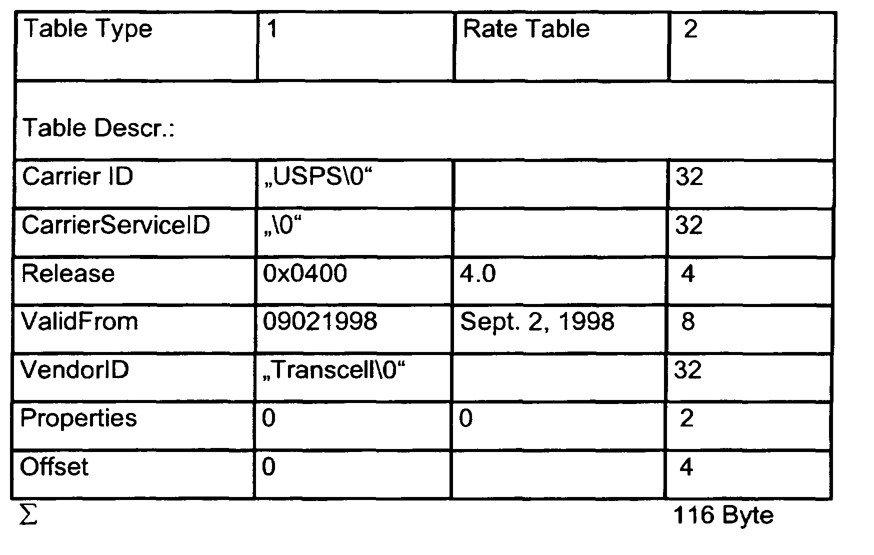

Alternativ für derartig gekennzeichnete Anforderungsdaten kann von einen anderen Dienstgerät auch eine Bestellnummer für eine Tabelle mit Dienstdaten übertragen werden, wenn jede Tabelle einer einzigartigen Bestellnummer zugeordnet ist.

Die zweite Transaktion 330 beginnt immer, ähnlich in der oben beschriebenen Weise, mit der Übermittlung der Identifikation der Dienstdaten, welche geladen werden sollen. Die Übermittlung erfolgt zur Datenzentrale, deren Server 32 nach dem Start 400 in einem ersten Schritt 410 Dienstdaten bereitstellt und im zweiten Schritt 420 spezifisch der ersten Transaktion entsprechend mit ACK-Signal antwortet, wenn die Identifikations-Nummer ID des Dienstgerätes in der Daten-bank 31 als nicht gesperrt gelistet ist. Anderenfalls erfolgt die Über-mittlung eines mit NACK-Signals zum Dienstgerät. Das Dienstgerät ist beispielsweise eine Frankiermaschine gemäß Fig.1 und der Typ der Dienstdaten ist eine Portotariftabelle "rate table". Auf der Dienstgeräteseite wird im zweiten Subschritt der ersten Transaktion 320 die übermittelte Antwort empfangen. Bei einem empfangenen NACK-Signal wird die Kommunikation abgebrochen. Bei einem empfangenen ACK-Signal wird ein Statusreport der Speicherbelegung beim Dienstgerät (Client) gebildet und dann die Kommunikation fortgesetzt.
Der Server empfängt also in einem Subschritt des Schrittes 430 diese Anforderung und sendet in einem Subschritt die angeforderten Dienstdaten an das Dienstgerät. Das Dienstgerät empfängt und speichert in einem zweiten Subschritt des Schrittes 330 die beim Datentransfer übermittelten Dienstdaten. Nach jedem Datentranfer wird vom Mikroprozessor festgestellt, ob alle gewünschten Dienstdaten vollständig übermittelt wurden oder ob eine Wiederaufnahme bzw. Weiterführung der Kommunikation mit weiteren Transaktionen erforderlich ist. Wird aber nach dem Datentranfer - wie im Schritt 211 der Fig.2 gezeigt - festgestellt, daß alle gewünschten Dienstdaten übemittelt wurden, dann wird der Punkt a erreicht. Das Verfahren zur Dateneingabe in einen Portorechner umfaßt folgende Schritte:
a) Bereitstellen mindestens eines ersten und zweiten Speicherbereiches (16-01, 16-02) im Dienstgerät pro Dienstleister, wobei der erste Speicherbereich (16-01) für zukünftig ab Umstellungsdatum gültige neue Dienstdaten und der zweite Speicherbereich (16-02) für bisher gültige Dienstdaten vorgesehen ist,
b) Überprüfen (209-60) im Dienstgerät auf Eingabe eines Ladebefehls, wobei bei Vorliegen eines Ladebefehls eine Kommunikation mit der Datenzentrale erfolgt,
c) Bildung (320-3) eines Statusreports der Speicherbelegung für Dienstdaten,
d) Kommunikation mit Übertragung des Statusreports zur Datenzentrale, mit Senden und mit Empfangen einer Nachricht mit Empfehlungen für einen zukünftigen Status der Speicherbelegung im Dienstgerät, wobei dem Senden der Nachricht von der Datenzentrale zum Dienstgerät eine Bildung (420-2) der Empfehlungen für einen zukünftigen Status der Speicherbelegung für eine Vielzahl an Dienstleistern aufgrund einer von der Datenzentrale durchgeführten Analyse des Statusreports der Speicherbelegung für Dienstdaten vorausgeht sowie
e) Selektieren eines der freien ersten Speicherbereiche (16-01) im Speicher des Dienstgerätes entsprechend den eingegebenen Empfehlungen in Verbindung mit dem Prüfen (320-4) letzterer auf Realisierbarkeit im Speicher des Dienstgerätes,
f) Bildung (330-1) von entsprechenden Anforderungsdaten und deren Übertragung zur Datenzentrale bei Realisierbarkeit des Speicherns und Fehlermeldung bei Nichtrealisierbarkeit,
g) Laden (330-2) von neuen Dienstdaten entsprechend der übermittelten Anforderungsdaten in den ersten Speicherbereich und Laden eines Umstellungsdatums sowie
h) automatisches Aktualisieren (213) unabhängig und zeitlich entkoppelt von dem vorgenannten Laden, wobei Dienstdaten aus dem entsprechenden ersten Speicherbereich in den zweiten Speicherbereich des Dienstgerätes eingespeichert werden, wobei das Aktualisieren zu einem beliebig späteren Umstellungsdatum erfolgen kann.

Das Dienstgerät wertet die Empfehlungen beim Prüfen aus, um sicherzustellen, daß ausreichend Speicherplatz vorhanden ist. In Verbindung mit dem Prüfen (320-4) von Empfehlungen auf Realisierbarkeit im Speicher des Dienstgerätes können nicht mehr gültige Dienstdaten im Speicher gelöscht und erst zukünftig gültige bzw. bereits gültige Dienstdaten in der Reihenfolge ihrer Empfehlung angefordert werden.
Das Laden erfolgt vorteilhaft für solche Dienstdaten, die durch einen entsprechenden Eintrag für Tabellen-Typ in der weiter oben dargestellten Tabelle gekennzeichnet sind. Der Eintrag "Table Typ" weist auf die vorteilhafte Möglichkeit hin, Dienstdaten völlig anderer Art zu laden, die aber ebenfalls Bestandteile des Lade-Systems sind. Die Tabellen unterscheiden sich entsprechend auch nach der Art der Dienstdaten.

Ein selektiver Download einzelner Bestandteile des Lade-Systems wird dadurch erreicht, daß in den - in Fig. 3 gezeigten - Subschritten (320-3) Bildung des Statusreports, Analyse und Bildung einer Liste mit Empfehlungen (420-2) von Änderungen, Anforderungsdaten bilden (330-1) ein entsprechender Eintrag für TableType gesetzt wird zur Identifizierung einer Tabelle für den Download. Beispielsweise sind die Typen möglich:
- rate table
- display strings (z.B. Texte für Wahldrucke oder Hilfetexte)
- combinations (plausible Versandparameter-Kombinationen)
- International Database (z.B. ISO-Tabelle für Ländercode)
- u.a.

Davon unabhängig besteht das Kommunikations-Protokoll zwischen Dienstgerät (Client) und Server immer aus den Teilen:
1. Eröffnung
2. Statusreport des Clients
3. Empfehlungen des Servers
4. Datentransfer

Im Falle der Wiederaufnahme eines abgebrochenen Downloads bzw. beim Download einer explizit ausgewählten Tabelle entfallen die Teile 2 und 3. Die Fortsetzung der Kommunikation mit Wiederaufnahme eines abgebrochenen Downloads ist nur in der Transferphase möglich. Es liegt an den Möglichkeiten des Dienstgerätes (Clients) weitere Empfehlungen des Servers automatisch weiterzuführen. Das Dienstgerät ist in der Lage die Empfehlungen zu speichern. Sinnvollerweise wird der Download nach dem zuletzt erfolgreich empfangenem Byte fortgesetzt.

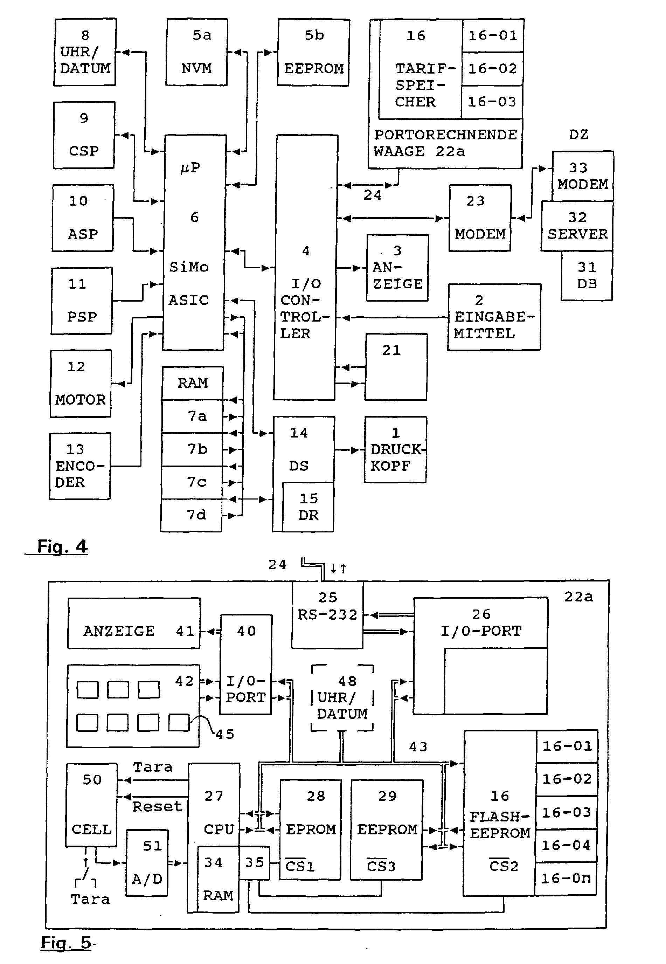

In der Figur 4 ist ein Blockschaltbild der elektronischen Frankiermaschine für eine Variante mit portoberechnender Waage 22a dargestellt. An einer - nicht näher gezeigten - seriellen RS 232-Schnittstelle des Ein/Ausgabe-Steuermoduls 4 ist über ein Verbindungsmittel 24 die portoberechnende Waage 22a mit ihrer seriellen RS 232-Schnittstelle angeschlossen. Die Waage 22a kann nun das Modem 23 der Frankiermaschine zur Kommunikation mit der Datenzentrale benutzen.
Der Portorechner ist in diesem Ausführungsbeispiel in die Waage 22a integriert, um den Portowert zu ermitteln und um letzteren dann zur Frankiermaschine zu übertragen. Im - nicht gezeigten - modifizierten Flußdiagramm, welches aber entsprechend zu dem in der Fig.2 gezeigten Flußdiagramm aufgebaut ist, entfällt dann natürlich der Schritt 220 des frankiermaschineninternen Portoberechnungsmodus.
Das Postbearbeitungssystem kann eine Frankiermaschine und eine Waage umfassen, wie beispielsweise das bekannte Waage/T1000-System der Firma Francotyp Postalia AG & Co. Um rechtzeitig eine Mehrheit an Postkunden mit einer Tariftabelle auszustatten, welche ab einem Umstellungstag aktuell ist, erfolgt im vorab ein Laden der zukünftig gültigen Tabelle.
Bei einem solchen Dienstdatenladen kommt beispielsweise ein Verfahren zur sicheren Übertragung von Dienstdaten an ein Endgerät zum Einsatz, welches schon in der nicht vorveröffentlichten deutschen Anmeldung 198 30 055.7 ausführlich beschrieben wurde und folgenden Verfahrenschritte aufweist: Nach einem Bereitstellen von neuen Dienstdaten in der Datenzentrale für eine zukünftige Verarbeitung basierend auf den Dienstdaten, erfolgt ein Bilden von Anforderungsdaten für Dienstdaten vom Endgerät vor der Kommunikation des Endgerätes mit einer Datenzentrale. Die Kommunikation umfaßt ein Senden der Anforderungsdaten, um die neuen Dienstdaten von der Datenzentrale anzufordern, und ein Empfangen und Zwischenspeichern der angeforderten Dienstdaten.

Eine betätigte Auslösetaste 45 der Waage 22a kann ein Vorabladen der zukünftig gültigen Tabelle auslösen, ohne die bestehende zweite Tabelle des selben Postbeförderers zu aktualisieren. Für jede Tabellenversion muß ein Datum für das Inkafttreten der Tabelle zugeordnet gespeichert werden. Die Überprüfung, ob die Tabelle in Kraft zu setzen ist, kann weiterhin mit Hilfe der Frankiermaschine erfolgen, weil diese bereits einen Uhren/Datums-Baustein enthält.

Im Unterschied zum Postbearbeitungssystem nach EP 724 141 A1 muß beim erfindungsgemäßen System nun nicht jedesmal beim Einschalten der Maschine mit einer langen Kommunikation mit einem entfernten Server und mit einem während der Kommunikation erfolgenden Umstellungsvorgang gerechnet werden. Vielmehr kann nun die betätigte Auslösetaste der Waage ein on-demand-Laden der zukünftig gültigen Tabelle vorab des Umstellungsvorganges auslösen. Der Umstellungsvorgang selbst bleibt vom Benutzer unbemerkt, weil er zeitlich versetzt und entkoppelt vom on-demand-Laden sowie automatisch am Umstellungstag und dabei relativ schnell abläuft.

Die Figur 5 zeigt ein Blockschaltbild einer Portorechner-Waage, welche über eine serielle Schnittstelle mit der Frankiermaschine nach Figur 1b verbunden ist. An die RS-232-Schnittstelle 25 der Waage 22a ist ein Ein/Ausgabe-Port 26 angeschlossen, welches mit dem internen BUS 43 mit dem Prozessor 27 der Waage 22a in Verbindung steht. Ein solcher BUS schließt Daten-, Adreß- und Steuerleitungen ein.

Die Waage umfaßt Eingabe- und Ausgabemittel 42 und 41, die über ein I/O-Port 40 mit dem Prozessor 27 verbunden sind, sowie über den internen BUS 43 mit dem Prozessor 27 verbundene Speichermittel 28 zum Speichern der Betriebssoftware der Waage, Speichermittel 29 zum Speichern von Anwendungsdaten (beispielsweise Wahldruck-Nummern) und Speichermittel 16 zum Speichern der geladenen Dienstdaten (z.B. der Portotabellen). Zum Ermitteln des Gewichtes ist eine Wiegezelle 50 über einen A/D-Wandler 51 mit dem Prozessor 27 verbunden und außerdem dienen direkte Verbindungen zum Rücksetzen (Reset) oder Tarieren (Tara) der Wiegezelle 50 durch den Prozessor 27. Weitergehende Ausführungen können der US 5,710,706 (EP 724 141 A1) entnommen werden. Optional kann ein batteriegestützter Kalenderbaustein 48 - gestrichelt gezeichnet - in die Waage 22a integriert sein. Er ist am internen BUS 43 angeschlossen. Alle notwendigen Eingaben werden über die Tastatur 42 vorgenommen. Auf dem Display 41 werden solche wichtigen Informationen ausgegeben, wie zum Beispiel das Gewicht des Postgutes und das anhand der Portogebührentabelle ermittelte Porto. Wird eine geänderte Portotariftabelle in einem elektronischen Portorechner benötigt, kann ein Nachladen bei Bedarf erfolgen. Dazu wird die Taste 45 betätigt, um den Ladevorgang auszulösen und es erscheint eine entsprechende Anzeige auf dem Display 41. Die betätigte Taste 45 löst eine Umschaltung in den Lademodus aber noch keinen Aktualisierungsmodus aus. Der Tarifspeicher 16 und der Prozessor 27 sind hier Bestandteil des Portorechners der portoberechnenden Waage 22a. Wird letztere in den Lademodus umgeschaltet, können verschiedene Dienstdaten und insbesondere die Portogebührentabellen geladen werden, welche ganz oder teilweise geändert werden sollen.

Erfindungsgemäß ist nun die portoberechnende Waage 22a dasjenige Dienstgerät, welches erfindungsgemäß einen Statusreport der Speicherbelegung durch Dienstdaten von verschiedenen Tariftabellen bildet und an die Datenzentrale übermittelt und welches beim Auswerten von Empfehlungen für einen zukünftigen Status der Speicherbelegung die Auswahl aus einer Anzahl an Vorschlägen automatisch durchführt. Bei der von der Datenzentrale durchgeführten Analyse des Statusreports der Speicherbelegung für Dienstdaten der portoberechnenden Waage 22a wird eine Liste mit Vorschlägen erstellt und an die portoberechnende Waage 22a zurück übermittelt. Erfindungsgemäß erhält der sinnvollste Vorschlag die höchste Priorität und ist entsprechend in der Liste gekennzeichnet. Das erfolgt vorzugsweise durch eine Nummerierung.
In einer bevorzugten Ausführungsform hat der zuerst gelistete Vorschlag die höchste Priorität und vom Dienstgerät (Waage 22a) erfolgt die Auswahl aus einer Anzahl an Vorschlägen für ein anschließendes Laden der Dienstdaten automatisch entsprechend der jeweils höchsten Priorität. Nach dem vorgenannten Laden der ersten Dienstdaten erhält nunmehr der bisher an zweiter Stelle in der Liste gelistete Vorschlag die höchste Priorität für ein anschließendes Laden der weiteren Dienstdaten, usw. Der Prozessor 27 ist entsprechend programmiert, daß der Vorschlag automatisch ausgewählt wird, welcher jeweils zuerst gelistet ist.
Wenn das Dienstgerät einen Portorechner einschließt, dann umfassen die Dienstdaten mindestens eine Portotariftabelle. Der Prozessor 27 ist zur Eingabe eines Umstellungserfordernis beim Laden programmiert sowie zum Überprüfen des Umstellungserfordernis und Umstellung auf die aktuelle neue Portotariftabelle, wenn das Umstellungserfordernis erfüllt ist oder Übergang in den Betriebsmodus, wenn das Umstellungserfordernis nicht erfüllt ist.

Ein Umstellungserfordernis ist beispielsweise ein Umstellungsdatum. So ist zusätzlich zum Laden von neuen Tariftabellendaten in vorgenannten ersten Bereich 16-01 des Speichers des Portorechners vorgesehen, daß ein Laden von einem zugehörigen Umstellungsdatum in einen dritten Bereich 16-03 des Speichers des Portorechners erfolgt. Die Frankiermaschine enthält bekanntlich einen Kalenderbaustein und übermittelt automatisch mindestens einmal, beispielsweise jeweils beim erstmaligem Einschalten am Anfang des Tages, das aktuell gültige Tagesdatum zum Portorechner. Im Portorechner wird das übermittelte Tagesdatum mit dem vorgenannten Umstellungsdatum verglichen.

In Verbindung mit dem erfindungsgemäßen Verfahren zur Dateneingabe in einen Portorechner, ist vorteilhaft, daß ein automatisches Aktualisieren unabhängig und zeitlich entkoppelt von dem vorgenannten Laden durchgeführt wird, wobei Tariftabellendaten aus dem ersten Speicherbereich 16-01 in den zweiten Speicherbereich 16-02 des Portorechners eingespeichert werden. Das Aktualisieren kann zu einem beliebig späteren Umstellungsdatum erfolgen. Der Prozessor 27 des Portorechners führt dann ein Einschreiben von Daten zur Aktualisierung der Tariftabellendaten im dafür vorgesehenen zweiten Speicherbereich 16-02 aus. Der erste Speicherbereich 16-01 ist nun frei für ein zukünftiges Laden von Dienstdaten. Im Tarifspeicher 16 des Portorechners wird mindestens ein erster und zweiter Speicherbereich bereitgestellt, wobei der zweite Speicherbereich die Tariftabellendaten der zur Zeit gültigen Tariftabelle speichert und der erste Speicherbereich für Tariftabellendaten der zukünftig ab Umstellungsdatum gültigen neuen Tariftabelle vorgesehen ist.

Es ist weiterhin vorgesehen, daß die Portotariftabellen oder Dienstdaten beim Laden komprimiert sind und bei der Umstellung nun die aktuelle neue Portotariftabelle oder aktuellen Dienstdaten dekomprimiert werden.

Der Prozessor 27 ist also programmiert, zum Überprüfen des gespeicherten Umstellungsdatums anhand des aktuellen Datums und zum Weiterarbeiten mit den alten Tariftabellendaten bei Unterschreitung des Umstellungsdatums durch das aktuelle Datum und zur Aktualisierung der Tariftabellendaten bei Gleichheit oder bei Überschreitung des Umstellungsdatums durch das aktuelle Datum. Mit anderen Worten, das automatische Aktualisieren unterbleibt, wenn das Tagesdatum kleiner als das Umstellungsdatum ist. Jedoch das automatische Aktualisieren wird vorgenommen, wenn das Tagesdatum größer oder gleich dem Umstellungsdatum ist. Dabei geht einer Übermittlung des Tagesdatums zum Portorechner der Schritt vorraus, daß der Portorechner automatisch das aktuell gültige Datum beim Kalenderbaustein anfordert. Letzteres erfolgt beispielsweise nach dem erstmaligem Einschalten am Anfang des Tages. Der Kalenderbaustein kann Bestandteil der Waage und/oder der Frankiermaschine sein. Beim Laden können Daten in verschiedene Geräte des Systems geladen werden. Das Laden von neuen Tariftabellendaten kann in einen ersten Bereich des Speichers des Portorechners und das Laden von einem zugehörigen Umstellungsdatum in einen zweiten Bereich des Speichers der Frankiermaschine erfolgen.

Erfindungsgemäß erfolgt auch ein Speichern einer Information in einem vierten Speicherbereich des Portorechners für in der Datenzentrale verfügbare neue Tariftabellendaten, wobei die Information beispielsweise ein Lade-Code oder eine carrierspezifische Versionsnummer ist.

Es werden folgende Schritte durchlaufen:
- Bereitstellen einer Information für in der Datenzentrale verfügbare neue Tariftabellendaten, und ein
- Übermitteln der Information von der Datenzentrale über die Frankiermaschine zum Portorechner,
- Speichern der Information im vierten Speicherbereich 16-04 für den Portorechner für solche in der Datenzentrale verfügbare neue Tariftabellendaten,
- Überprüfen im Portorechner anhand der gespeicherten Information auf Eingabe eines der Information entsprechenden zugehörigen Lade-Codes, der per Eingabemittel eingegeben wurde,
- Modusumschaltung auf einen Lademodus mit Selektieren eines freien ersten Speicherbereiches im Portorechner, wenn der Lade-Code ein vorbestimmtes Verhältnis zur Information hat, und Laden von zur Information zugehörigen komprimierten neuen Tariftabellendaten und von einem zugehörigen Umstellungsdatum in Abhängigkeit von der Überprüfung im Portorechner vor dem automatischen Aktualisieren.

Die Erfindung sieht in einer Ausführungsform ein Laden von zur Information zugehörigen neuen Tariftabellendaten in einen ersten Bereich eines Speichers der Frankiermaschine vor, wobei anschließend ein Kopieren in den Speicher des Portorechners erfolgt. Ein Laden von einem zugehörigen Umstellungsdatum erfolgt jedoch in einen zweiten Bereich des Speichers der Frankiermaschine, gefolgt von einem anschließenden Kopieren in den Speicher des Portorechners, wobei das Umstellungsdatum im zweiten Bereich des Speichers der Frankiermaschine gelöscht wird. Der Frankiermaschine wird bei jeder ersten Übertragung von Gewichts- oder Portowertdaten aus dem Portorechner das gespeicherte Umstellungsdatum für denjenigen Carrier mitgeteilt wird, welcher für den Portorechner eingestellt wurde.
Die Erfindung sieht in einer weiteren Ausführungsform mit einem Portorechner in einer Waage vor, daß der Portorechner in einer Waage ein selektives Löschen von Speicherbereichen in der Waage vor dem Laden von komprimierten neuen Tariftabellendaten vornimmt. Der Portorechner führt dann zur Aktualisierung der Tariftabellendaten eine Dekomprimierung der geladenen neuen Tariftabellendaten und Einschreiben von dekomprimierten Daten durch, wobei Tariftabellendaten aus dem ersten Speicherbereich dekomprimiert und in den zweiten Speicherbereich der Waage eingespeichert werden. Das ermöglicht es, daß das automatische Aktualisieren zu einem beliebig späteren Umstellungsdatum unabhängig und zeitlich entkoppelt von dem vorgenannten Laden erfolgen kann.
Es ist in einer Variante vorgesehen, daß eine Automatik Anforderungsdaten bildet, um auf aktuelle Tabellen zugreifen zu können, wenn der Zeitpunkt für neue Portotariftabellendaten herangerückt ist. Diese Automatik arbeitet abhängig vom eingestellten Carrier und dem vom Uhren/Datumsbaustein 8 der Frankiermaschine gelieferten Datum. Die Automatik kann im Portorechner und/oder in den Speicherzellen des Uhren/Datumsbausteins 8 realisiert sein.

Der Portorechner kann in eine portoberechnende Waage 22a integriert sein, welche schnittstellenmäßig mit der Frankiermaschine verbunden ist. Es ist auch möglich, daß das den Portorechner einschließende System eine Frankiermaschine ist. Dabei soll aber auch der Fall nicht ausgeschlossen werden, daß der Portorechner im System separat von der Frankiermaschine und/oder Waage realisiert ist und mit letzteren schnittstellenmäßig verbunden ist.

## Patentansprüche

1. Verfahren zur Dateneingabe in ein Dienstgerät, mit einem Laden von Dienstdaten nach Anforderung, wobei eine Kommunikation mit einer Datenzentrale erfolgt, **gekennzeichnet durch** die Schritte:
- Bildung (320-3) eines Statusreports der Speicherbelegung für Dienstdaten im Dienstgerät und Übertragung des Statusreports zur Datenzentrale,
- Bildung (420-2) von Empfehlungen in der Datenzentrale für einen zukünftigen Status der Speicherbelegung im Dienstgerät und Übermitteln einer Nachricht mit den Empfehlungen von der Datenzentrale zum Dienstgerät,
- Prüfen (320-4) der vorgenannten Empfehlungen in der Nachricht auf Realisierbarkeit im Dienstgerät sowie
- Laden (330-2) von entsprechenden Dienstdaten von der Datenzentrale in das Dienstgerät.

2. Verfahren, nach Anspruch 1, **gekennzeichnet durch** die Schritte:
a) Bereitstellen mindestens eines ersten und zweiten Speicherbereiches (16-01, 16-02) im Dienstgerät pro Dienstleister, wobei der erste Speicherbereich (16-01) für zukünftig ab Umstellungsdatum gültige neue Dienstdaten und der zweite Speicherbereich (16-02) für bisher gültige Dienstdaten vorgesehen ist,
b) Überprüfen (209-60) im Dienstgerät auf Eingabe eines Ladebefehls, wobei bei Vorliegen eines Ladebefehls eine Kommunikation mit der Datenzentrale erfolgt,
c) Bildung (320-3) eines Statusreports der Speicherbelegung für Dienstdaten,
d) Kommunikation mit Übertragung des Statusreports zur Datenzentrale, mit Senden und mit Empfangen einer Nachricht mit Empfehlungen für einen zukünftigen Status der Speicherbelegung im Dienstgerät, wobei dem Senden der Nachricht von der Datenzentrale zum Dienstgerät eine Bildung (420-2) der Empfehlungen für einen zukünftigen Status der Speicherbelegung für eine Vielzahl an Dienstleistern aufgrund einer von der Datenzentrale durchgeführten Analyse des Statusreports der Speicherbelegung für Dienstdaten vorausgeht sowie
e) Selektieren eines der freien ersten Speicherbereiche (16-01) im Speicher des Dienstgerätes entsprechend den eingegebenen Empfehlungen in Verbindung mit dem Prüfen (320-4) letzterer auf Realisierbarkeit im Speicher des Dienstgerätes,
f) Bildung (330-1) von entsprechenden Anforderungsdaten und deren Übertragung zur Datenzentrale bei Realisierbarkeit des Speicherns und Fehlermeldung bei Nichtrealisierbarkeit,
g) Laden (330-2) von neuen Dienstdaten entsprechend der übermittelten Anforderungsdaten in den ersten Speicherbereich und Laden eines Umstellungsdatums sowie
h) automatisches Aktualisieren (213) unabhängig und zeitlich entkoppelt von dem vorgenannten Laden, wobei Dienstdaten aus dem entsprechenden ersten Speicherbereich in den zweiten Speicherbereich des Dienstgerätes eingespeichert werden, wobei das Aktualisieren zu einem beliebig späteren Umstellungsdatum erfolgen kann.

3. Verfahren, nach Anspruch 2, **gekennzeichnet dadurch, daß** in Verbindung mit dem Prüfen (320-4) von Empfehlungen auf Realisierbarkeit im Speicher des Dienstgerätes nicht mehr gültige Dienstdaten im Speicher gelöscht und gültige Dienstdaten in der Reihenfolge ihrer Empfehlung angefordert werden, daß zu einem ersten Zeitpunkt ein selektiver Download einzelner Bestandteile eines Lade-Systems durchgeführt wird, wobei Tabellen-Typ und Tabellen-Beschreibung als Anforderungsdaten vom Dienstgerät zur Datenzentrale übermittelt werden, wobei sich die Tabellen nach der Art der Dienstdaten unterscheiden und wobei ein entsprechender Eintrag für den Tabellen-Typ für unterschiedliche Tabellen mit Dienstdaten anderer Art gesetzt wird, sowie
daß zu einem zweiten Zeitpunkt ein Aktualisieren von Dienstdaten durchgeführt wird, dem ein Überprüfen des gespeicherten Umstellungsdatums im Dienstgerät anhand des aktuellen Datums vorausgeht, wobei bei Gleichheit oder bei Überschreitung des Umstellungsdatums durch das aktuelle Datum ein Aktualisierung der Dienstdaten erfolgt jedoch bei Unterschreitung des Umstellungsdatums durch das aktuelle Datum ein Weiterarbeiten mit den alten Dienstdaten erfolgt.

4. Verfahren, nach einem der Anspruch 1 bis 3, **gekennzeichnet** t **dadurch**, daß das Laden von neuen Tariftabellendaten in einen ersten Bereich (16-01) des Speichers des Portorechners und das Laden von einem zugehörigen Umstellungsdatum in einen dritten Bereich (16-03) des Speichers des Portorechners erfolgt, daß die Frankiermaschine einen Kalenderbaustein enthält und automatisch mindestens einmal das aktuell gültige Tagesdatum zum Portorechner übermittelt, daß im Portorechner das übermittelte Tagesdatum mit dem vorgenannten Umstellungsdatum verglichen wird sowie daß das automatische Aktualisieren unterbleibt, wenn das Tagesdatum kleiner als das Umstellungsdatum ist oder daß das automatische Aktualisieren vorgenommen wird, wenn das Tagesdatum größer oder gleich dem Umstellungsdatum ist.

5. Verfahren, nach einem der Anspruch 1 bis 3, **gekennzeichnet dadurch, daß** der Portorechner automatisch das aktuell gültige Datum jeweils bei einem Kalenderbaustein anfordert.

6. Verfahren, nach Anspruch 3, **gekennzeichnet dadurch, daß** das Laden von neuen Tariftabellendaten in einen ersten Bereich des Speichers des Portorechners und das Laden von einem zugehörigen Umstellungsdatum in einen zweiten Bereich eines Speichers der Frankiermaschine erfolgt.

7. Verfahren, nach den Ansprüchen 1 bis 4, **gekennzeichnet durch** ein Speichern einer Information in einem vierten Speicherbereich (16-04) des Portorechners für in der Datenzentrale verfügbare neue Tariftabellendaten, wobei vor dem Speichern der Information im Portorechner:
- ein Bereitstellen einer Information für in der Datenzentrale verfügbare neue Tariftabellendaten, und
- ein Übermitteln der Information von der Datenzentrale über die Frankiermaschine zum Portorechner,
- ein Speichern der Information im vierten Speicherbereich (16-04) für den Portorechner für solche in der Datenzentrale verfügbare neue Tariftabellendaten,
- ein Überprüfen im Portorechner anhand der gespeicherten Information auf Eingabe eines der Information entsprechenden zugehörigen Lade-Codes, der per Eingabemittel eingegeben wurde,
- eine Modusumschaltung auf einen Lademodus erfolgt, mit Selektieren eines freien ersten Speicherbereiches im Portorechner, wenn der Lade-Code ein vorbestimmtes Verhältnis zur Information hat, und Laden von zur Information zugehörigen komprimierten neuen Tariftabellendaten und von einem zugehörigen Umstellungsdatum in Abhängigkeit von der Überprüfung im Portorechner vor dem automatischen Aktualisieren.

8. Verfahren, nach Anspruch 7, **dadurch gekennzeichnet, daß** das Bereitstellen einer Information für in der Datenzentrale verfügbare neue Tariftabellendaten in einer Liste erfolgt, welche eine Anzahl an Vorschlägen aufweist.

9. Verfahren, nach Anspruch 8, **dadurch gekennzeichnet, daß** in der Liste der sinnvollste Vorschlag zuerst gelistet ist.

10. Anordnung, zur Durchführung des Verfahrens nach Anspruch 1, mit einem Dienstgerät, das eine Auslöseeinrichtung (2, 6, 8, 42, 27, 48) zum Auslösen eines Ladens, einen Prozessor (6, 27) und einen Speicher (16) zur Speicherung von Dienstdaten enthält, wobei der Prozessor (6, 27) zum Laden und Aktualisieren von Dienstdaten programmiert ist, **gekennzeichnet dadurch, daß** der Prozessor programmiert ist:
- zur Bildung eines Statusreports der Speicherbelegung für Dienstdaten,
- zur Kommunikation mit Übertragung des Statusreports der Speicherbelegung zur Datenzentrale (DZ) und mit Empfangen einer Empfehlungen enthaltenden Nachricht von der Datenzentrale (DZ) und
- zum Prüfen von Empfehlungen für einen zukünftigen Status der Speicherbelegung aufgrund derjenigen von der Datenzentrale (DZ) durchgeführten Analyse des Statusreports der Speicherbelegung für Dienstdaten, sowie
- zum Laden von neuen Dienstdaten in den vorgenannten Speicher (16).

11. Anordnung, nach Anspruch 10, **gekennzeichnet dadurch, daß** der Prozessor zum Selektieren freier Speicherbereiche (16-01) im Dienstgerät entsprechend einer der geprüften Empfehlungen programmiert ist, wobei beim vorgenannten Prüfen von Empfehlungen für einen zukünftigen Status der Speicherbelegung vom Dienstgerät die Auswahl aus einer Anzahl an Vorschlägen automatisch erfolgt.

12. Anordnung, nach Anspruch 11, **gekennzeichnet dadurch, daß** ein Vorschlag die höchste Priorität erhält und entsprechend in der Liste **gekennzeichnet** ist sowie vom Mikroprozessor automatisch ausgewählt wird.

13. Anordnung, nach Anspruch 12, **gekennzeichnet dadurch, daß** der Vorschlag durch eine Nummerierung in der Liste **gekennzeichnet** ist.

14. Anordnung, nach Anspruch 12, **gekennzeichnet dadurch, daß** der Vorschlag vom Mikroprozessor automatisch ausgewählt wird, welcher zuerst gelistet ist.

15. Anordnung, nach einem der Ansprüche 10 bis 14, **gekennzeichnet dadurch, daß** beim Laden von neuen Dienstdaten ein zugehöriges Umstellungsdatum in den vorgenannten Speicher (16) geladen wird, wobei das Laden zu einem ersten Zeitpunkt erfolgt und die Dienstdaten beim Laden komprimiert sind, daß die Umstellung zu einem dem Umstellungsdatum entsprechenden zweiten Zeitpunkt erfolgt und daß bei der Umstellung auf die aktuellen Dienstdaten vom Mikroprozessor die komprimierten Dienstdaten dekomprimiert werden.

16. Anordnung, nach einem der Ansprüche 10 bis 15, **gekennzeichnet dadurch, daß** der Mikroprozessor programmiert ist, daß Dienstdaten geladen werden, die nur Teile einer Tabelle ausmachen.

17. Anordnung, nach einem der Ansprüche 10 bis 16, **gekennzeichnet dadurch, daß** der Mikroprozessor (6, 27) zusammen mit der Tastatur (2, 42) und dem Kalenderbaustein (8, 48) eine Auslöseeinrichtung bildet, die einen Ladebefehl abgeben kann, um ein vorprogrammiertes Laden zu dem ersten Zeitpunkt auszulösen und daß der Mikroprozessor (6, 27) zum Überprüfen auf Vorliegen eines Ladebefehls programmiert ist.

18. Anordnung, nach einem der vorgenannten Ansprüche 10 bis 15, **gekennzeichnet dadurch, daß** die Dienstdaten eine Portotariftabelle einschließen und daß das Dienstgerät einen Portorechner einschließt, der programmiert ist:
- zur Eingabe eines Umstellungserfordernis beim Laden sowie
- zum Überprüfen des Umstellungserfordernis und Umstellung auf die aktuelle neue Portotariftabelle, wenn das Umstellungserfordernis erfüllt ist oder Übergang in den Betriebsmodus, wenn das Umstellungserfordernis nicht erfüllt ist.

## Claims

1. A method for data input into a service device with a loading of service data upon request, wherein a communication with a data central is effected, **characterized by** the following steps:
- generation (320-3) of a status report of the memory occupancy for service data in the service device and transmission of the status report to the data central,
- generation (420-2) of recommendations at the data central for a future status of the memory occupancy in the service device and transmission of a message with the recommendations from the data central to the service device,
- checking (320-4) of the above-mentioned recommendations contained in the message as to realizability in the service device, as well as
- loading (330-2) of respective service data from the data central into the service device.

2. A method according to Claim 1, **characterized by** the following steps:
a) provision of at least one first and one second memory area (16-01, 16-02) per service provider in the service device, wherein the first memory area (16-01) is provided for new service data valid in the future from the changeover date on and the second memory area (16-02) is provided for service data valid up to now,
b) checking (209-60) in the service device for input of a loading command, wherein a communication with the data central is effected when a loading command is present,
c) generation (320-3) of a status report of the memory occupancy for service data,
d) communication with transmission of the status report to the data central with sending and receiving of a message with recommendations for a future status of the memory occupancy in the service device, wherein the sending of the message from the data central to the service device is preceded by a generation (420-2) of the recommendations for a future status of the memory occupancy for a plurality of service providers on the basis of the analysis of the status report of the memory occupancy for service data made at the data central,
e) selection of one of the free first memory areas (16-01) in the memory of the service device according to the recommendations entered in connection with the checking (320-4) of the latter as to realizability in the memory of the service device,
f) generation (330-1) of respective request data and their transmission to the data central if the storage is realizable and error message in case of non-realizability,
g) loading (330-2) of new service data into the first memory area according to the request data transmitted and loading of a changeover date, as well as
h) automatic updating (213) independent and decoupled from the time of the aforementioned loading, wherein service data from the respective first memory area are stored into the second memory area of the service device, wherein the updating can be effected on any later changeover date.

3. A method according to Claim 2, **characterized in that**, in connection with the checking (320-4) of recommendations as to realizability in the memory of the service device, service data that are not valid anymore are deleted in the memory and valid service data are requested in the order of their recommendation; that a selective download of individual components of a loading system is executed at a first point of time, wherein table type and table description are transmitted as request data from the service device to the data central, wherein the tables differ according to the type of service data and wherein a respective entry for the table type is made for different tables with service data of another kind; and that an updating of service data is performed at a second point of time, which is preceded by a checking of the stored changeover date in the service device on the basis of the current date, wherein the service data are updated if the current date is equal or higher than the changeover date, but the work with the old service data is continued if the current date is lower than the changeover date.

4. A method according to one of the Claims 1 to 3, **characterized in that** new tariff table data are loaded into a first area (16-01) of the memory of the postage computer and a related changeover date is loaded into a third area (16-03) of the memory of the postage computer, that the franking machine includes a calendar module and automatically transmits at least once the respective current date to the postage computer, that, in the postage computer, the transmitted current date is compared with the above-mentioned changeover date, and that the automatic updating is not effected when the current date is lower than the changeover date or that the automatic updating is effected when the current date is higher than or equal to the changeover date.

5. A method according to one of the Claims 1 to 3, **characterized in that** the postage computer automatically requests the respective current date from a calendar module.

6. A method according to Claim 3, **characterized in that** new tariff table data are loaded into a first area of the memory of the postage computer and a related changeover date is loaded into a second area of the memory of the postage computer.

7. A method according to Claims 1 to 4, **characterized by** a storage of an information into a fourth memory area (16-04) of the postage computer for new tariff data tables available at the data central, wherein, before the information is stored in the postage computer,
- an information on new tariff data tables available at the data central is provided,
- the information is transmitted from the data central via the franking machine to the postage computer,
- the information is stored in the fourth memory area (16-04) for the postage computer for such new tariff data tables available at the data central,
- a check is made in the postage computer on the basis of the stored information as to the entry of a loading code related to the information that was entered by input means,
- the mode is switched over to a loading mode, with selection of a free first memory area in the postage computer if the loading code has a pre-defined relation to the information and loading of compressed new tariff table data pertaining to the information and of a related changeover date depending on the check made in the postage computer prior to the automatic updating.

8. A method according to Claim 7, **characterized in that** the provision of an information on new tariff table data available at the data central is made in a list containing a number of recommendations.

9. A method according to Claim 8, **characterized in that** the most sensible recommendation is listed as the first entry on the list.

10. An arrangement for performing the method according to claim 1 with a service device having a trigger device (2, 6, 8, 42, 27, 48) for triggering a loading process, a processor (6, 27) and a memory (16) for the storage of service data, wherein the processor (6, 27) is programmed for loading and updating service data, **characterized in that** the processor is programmed for:
- generating a status report of the memory occupancy for service data,
- communication with a transmission of the status report of memory occupancy to the data central (DZ) and with receiving of a message containing recommendations from the data central (DZ), and
- checking the recommendations for a future status of memory occupancy on the basis of the analysis of the status report of memory occupancy made by the data central (DZ) for service-data, as well as
- loading new service data into the above-mentioned memory (16).

11. An arrangement according to Claim 10, **characterized in that** the processor is programmed for selecting free memory areas (16-01) in the service device according to one of the checked recommendations, wherein, in the above-mentioned checking of recommendations for a future status of the memory occupancy of the service device, the selection is made automatically from a number of proposals.

12. An arrangement according to Claim 11, **characterized in that** one proposal is given highest priority, is accordingly marked on the list and is automatically selected by the microprocessor.

13. An arrangement according to Claim 12, **characterized in that** the recommendation is marked by numbering on the list.

14. An arrangement according to Claim 12, **characterized in that** the microprocessor automatically selects the proposal that is listed on top of the list.

15. An arrangement according to one of the Claims 10 to 14, **characterized in that**, with the loading of new service data, a related changeover date is loaded into the above-mentioned memory (16), wherein the loading is effected at a first point of time and the service data are compressed upon loading, that the changeover is effected at a second point of time according to the changeover date, and that, upon changeover to the current service data, the compressed service data are decompressed by the microprocessor.

16. An arrangement according to one of the Claims 10 to 15, **characterized in that** the microprocessor is programmed for loading service data that form only parts of a table.

17. An arrangement according to one of the Claims 10 to 16, **characterized in that** the microprocessor (6, 27), together with the keyboard (2, 42) and the calendar module (8, 48), forms a trigger device that can give a loading order for triggering a pre-programmed loading at a first point of time and that the microprocessor (6, 27) is programmed to check for the existence of a loading order.

18. An arrangement according to one of the above Claims 10 to 15, **characterized in that** the service data include a postage tariff table and that the service device includes a postage computer that is programmed
- for entering a changeover requirement upon loading, as well as
- for checking the changeover requirement and changing over to the current new postage tariff table when the changeover requirement exists or change to the operating mode when the changeover requirement does not exist.

## Revendications

1. Procédé destiné à l'entrée de données dans un appareil de service, doté d'un chargement de données de service sur demande, sachant qu'une communication s'effectue avec une centrale de données, **caractérisé en** les étapes de :
- formation (320-3) d'un rapport de statuts de l'affectation de mémoire pour les données de service dans l'appareil de service et transmission du rapport de statuts vers la centrale de données,
- formation (420-2) de recommandations dans la centrale de données pour un statut futur de l'affectation de mémoire dans l'appareil de service et transmission d'un message avec les recommandations, de la centrale de données vers l'appareil de service,
- contrôle (320-4) de l'aptitude à la réalisation dans l'appareil de service des recommandations précitées dans le message ainsi que
- chargement (330-2) de données de service correspondantes, de la centrale de données dans l'appareil de service.

2. Procédé selon la revendication 1, **caractérisé en** les étapes de :
a) mise à disposition d'au moins une première et d'une deuxième zone de mémoire (16-01, 16-02) dans l'appareil de service par prestataire, sachant que la première zone de mémoire (16-01) est prévue pour de nouvelles données de services valables à l'avenir à partir de la date de conversion et la deuxième zone de mémoire (16-02) pour les données de service valables jusqu'à présent,
b) Examen (209-60) de la saisie d'une instruction de chargement dans l'appareil de service, sachant qu'en cas de présence d'une instruction de chargement, une communication s'effectue avec la centrale de données,
c) Constitution (320-3) d'un rapport de statuts de l'affectation de mémoire pour les données de service,
d) Communication avec transmission du rapport de statuts vers la centrale de données, avec envoi et avec réception d'un message doté de recommandations pour un statut futur de l'affectation de mémoire dans l'appareil de service, sachant que l'envoi du message de la centrale de données à l'appareil de service est précédé par une formation (420-2) des recommandations pour un statut futur de l'affectation de mémoire, lesdites recommandations étant destinées à une multitude de prestataires en raison d'une analyse du rapport de statuts de l'affectation de mémoire pour les données de service, ladite analyse ayant été effectuée par la centrale de données ainsi que
e) Sélection d'une des premières zones de mémoire libres (16-01) dans la mémoire de l'appareil de service de manière correspondante aux recommandations saisies en relation avec le contrôle (320-4) de l'aptitude à la réalisation de ces dernières dans la mémoire de l'appareil de service,
f) Formation (330-1) de données de sollicitation correspondantes et leur transmission à la centrale de données en cas d'aptitude à la réalisation de la mémorisation et message d'erreur en cas d'inaptitude à la réalisation,
g) Chargement (330-2) de nouvelles données de service de manière correspondante aux données de sollicitation transmises dans la première zone de mémoire et chargement d'une date de conversion ainsi que
h) Actualisation automatique (213) découplée indépendamment et temporellement du chargement précité, sachant que les données de service provenant de la première zone de mémoire correspondante sont enregistrées dans la deuxième zone de mémoire de l'appareil de service, l'actualisation pouvant s'effectuer à une date ultérieure de conversion choisie librement.

3. Procédé selon la revendication 2, **caractérisé en ce que** en relation avec le contrôle (320-4) de l'aptitude à la réalisation des recommandations dans la mémoire de l'appareil de service, des données de service n'étant plus valables sont effacées dans la mémoire et des données de service valables sollicitées par ordre de leur recommandation, **en ce que** s'effectue, à un premier moment, un téléchargement sélectif de composants individuels d'un système de chargement, sachant que le type de tableaux et la description des tableaux sont transmis comme données de sollicitation de l'appareil de service vers la centrale de données, et sachant que les tableaux se distinguent selon le type des données de services, une inscription correspondante étant définie pour le type de tableau destiné à différents tableaux avec des données de service d'un autre type, et **en ce que**, à un deuxième moment, une actualisation des données de service s'effectue, laquelle est précédée par un examen de la date de conversion mémorisée dans l'appareil de service à l'aide de la date actuelle, sachant que, en cas d'uniformité ou de dépassement de la date de conversion par la date actuelle, une actualisation des données de service s'effectue, mais que toutefois, en cas de sous-dépassement de la date de conversion par la date actuelle, un fonctionnement se poursuivra avec les anciennes données de service.

4. Procédé selon l'une des revendications 1 à 3, **caractérisé en ce que** le chargement de nouvelles données de tableaux de tarifs s'effectue dans une première zone (16-01) de la mémoire du compteur de frais de port et le chargement d'une date de conversion affectée s'effectue dans une troisième zone (16-03) de la mémoire du compteur de frais de port, **en ce que** l'affranchisseuse contient un module de calendrier et transmet automatiquement au moins une fois la date valide actuelle du jour au compteur de frais de port, **en ce que**, dans le compteur de frais de port, la date du jour transmise est comparée avec la date de conversion précitée et **en ce que** l'actualisation automatique ne se produit pas si la date du jour est inférieure à la date de conversion ou **en ce que** l'actualisation automatique se produit si la date du jour est supérieure ou égale à la date de conversion.

5. Procédé selon l'une des revendications 1 à 3, **caractérisé en ce que** le compteur de frais de port sollicite automatiquement la date valable actuelle auprès d'un module de calendrier respectif.

6. Procédé selon la revendication 3, **caractérisé en ce que** le chargement de nouvelles données de tableaux de tarifs s'effectue dans une première zone de la mémoire du compteur de frais de port et le chargement d'une date de conversion affectée s'effectue dans une deuxième zone d'une mémoire de l'affranchisseuse.

7. Procédé selon l'une des revendications 1 à 4, **caractérisé en** une mémorisation d'une information dans une quatrième zone de mémoire (16-04) du compteur de frais de port pour de nouvelles données de tableaux de tarifs disponibles dans la centrale de données, sachant que s'effectue avant la mémorisation de l'information dans le compteur de frais de port :
- une mise à disposition d'une information pour les nouvelles données de tableaux de tarifs disponibles dans la centrale de données,
- une transmission de l'information de la centrale de donnée au compteur de frais de port via l'affranchisseuse,
- une mémorisation de l'information dans la quatrième zone de mémoire (16-04) pour le compteur de frais de port, destinée aux nouvelles données spécifiques de tableaux de tarifs disponibles dans la centrale de données,
- un contrôle dans le compteur de frais de port de la saisie de l'un des codes de chargement affectés correspondant à l'information qui a été saisie par mode de saisie à l'aide de l'information mémorisée,
- une commutation de mode en un mode de chargement, avec sélection d'une première zone de mémoire libre dans le compteur de frais de port, si le code de chargement a une relation prédéfinie par rapport à l'information et le chargement de nouvelles données comprimées de tableaux de tarifs affectées à l'information et d'une date de conversion affectée dépendant du contrôle dans le compteur de frais de port avant l'actualisation automatique.

8. Procédé selon la revendication 7, **caractérisé en ce que** la mise à disposition d'une information s'effectue dans une liste pour de nouvelles données de tableaux de tarifs disponibles dans la centrale de données, ladite liste présentant un nombre de propositions.

9. Procédé selon la revendication 8, **caractérisé en ce que** la proposition la plus judicieuse est répertoriée en premier dans la liste.

10. Disposition destinée à l'exécution du procédé selon la revendication 1, dotée d'un appareil de service contenant un dispositif de déclenchement (2, 6, 8, 42, 27, 48) afin de déclencher un chargement, un processeur (6, 27) et une mémoire (16) pour mémoriser les données de service, sachant que le processeur (6, 27) est programmé pour charger et actualiser des données de service, **caractérisée en ce que** le processeur est programmé :
- afin de créer un rapport de statuts de l'affectation de mémoire pour les données de service,
- pour la communication avec transmission du rapport de statuts de l'affectation de mémoire vers la centrale de données (DZ) et avec réception d'un message de la centrale de données (DZ) contenant des recommandations et
- afin d'examiner les recommandations destinées à un statut futur de l'affectation de mémoire en raison de ladite analyse, effectuée par la centrale de données (DZ), du rapport de statuts de l'affectation de mémoire pour les données de service, ainsi que
- pour charger de nouvelles données de service dans la mémoire (16) précitée.

11. Disposition selon la revendication 10, **caractérisée en ce que** le processeur de sélection des zones de mémoire libres (16-01) est programmé de manière correspondante à l'une des recommandations contrôlées dans l'appareil de service, sachant que, lors du contrôle précité des recommandations destinées à un statut futur de l'affectation de mémoire de l'appareil de service, la sélection s'effectue automatiquement à partir d'un nombre de propositions.

12. Disposition selon la revendication 11, **caractérisée en ce qu'**une proposition reçoit la plus haute priorité, qu'elle est marquée de manière correspondante dans la liste ainsi que sélectionnée automatiquement par le microprocesseur.

13. Disposition selon la revendication 12, **caractérisée en ce que** la proposition est marquée par une numérotation dans la liste.

14. Disposition selon la revendication 12, **caractérisée en ce que** la proposition qui est répertoriée en premier est sélectionnée automatiquement par le microprocesseur.

15. Disposition selon l'une des revendications 10 à 14, **caractérisée en ce que** lors du chargement de nouvelles données de service, une date de conversion affectée est chargée dans la mémoire (16) précitée, sachant que le chargement s'effectue à un premier moment et que les données de service sont comprimées lors du chargement, **en ce que** la conversion s'effectue à un deuxième moment correspondant à la date de conversion, et **en ce que** les données de service comprimées sont décomprimées par le microprocesseur lors de la conversion aux données de service actuelles.

16. Disposition selon l'une des revendications 10 à 15, **caractérisée en ce que** le microprocesseur est programmé afin que soient chargées les données de service convenant seulement des parties d'un tableau.

17. Disposition selon l'une des revendications 10 à 16, **caractérisée en ce que**, ensemble avec le clavier (2, 42) et le module de calendrier (8, 48), le microprocesseur (6, 27) constitue un dispositif de déclenchement, qui peut émettre une instruction de chargement afin de déclencher un chargement préprogrammé au premier moment et **en ce que** le microprocesseur (6, 27) est programmé pour examiner s'il y a présence d'une instruction de chargement.

18. Disposition selon l'une des revendications précitées 10 à 15, **caractérisée en ce que** les données de service comprennent un tableau de tarifs de frais de port et **en ce que** l'appareil de service comprend un compteur de frais de port qui est programmé :
- afin de saisir une nécessité de conversion lors du chargement ainsi que
- pour contrôler la nécessité de conversion et convertir au nouveau tableau actuel de tarifs de frais de port, si la nécessité de conversion est remplie ou pour le passage en mode d'exploitation, si la nécessité de conversion n'est pas remplie.
